(19) **Europäisches Patentamt / European Patent Office / Office européen des brevets**

(11) **EP 4 779 974 A1**

(12) **EUROPEAN PATENT APPLICATION**
published in accordance with Art. 153(4) EPC

(43) Date of publication:
**22.07.2026 Bulletin 2026/30**

(21) Application number: **24865901.3**

(22) Date of filing: **13.09.2024**

(51) International Patent Classification (IPC):
$H04N\ 19/107^{(2014.01)}$  $H04N\ 19/593^{(2014.01)}$
$H04N\ 19/176^{(2014.01)}$  $H04N\ 19/105^{(2014.01)}$
$H04N\ 19/70^{(2014.01)}$  $H04N\ 19/159^{(2014.01)}$
$H04N\ 19/11^{(2014.01)}$

(52) Cooperative Patent Classification (CPC):
**H04N 19/105; H04N 19/107; H04N 19/11;
H04N 19/159; H04N 19/176; H04N 19/593;
H04N 19/70**

(86) International application number:
**PCT/KR2024/013998**

(87) International publication number:
**WO 2025/058462 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.09.2023  US 202363538509 P**

(71) Applicant: **LG Electronics Inc.**
**Yeongdeungpo-gu
Seoul 07336 (KR)**

(72) Inventors:
• **PARK, Naeri**
  **Seoul 06772 (KR)**
• **NAM, Junghak**
  **Seoul 06772 (KR)**
• **LIM, Jaehyun**
  **Seoul 06772 (KR)**
• **AHN, Yongjo**
  **Seoul 06772 (KR)**
• **KIM, Seunghwan**
  **Seoul 06772 (KR)**
• **CHOI, Jangwon**
  **Seoul 06772 (KR)**
• **HONG, Myungoh**
  **Seoul 06772 (KR)**

(74) Representative: **Maikowski & Ninnemann
Patentanwälte Partnerschaft mbB
Postfach 15 09 20
10671 Berlin (DE)**

(54) **DECODING METHOD, ENCODING METHOD, AND METHOD FOR TRANSMITTING IMAGE INFORMATION**

(57)  Provided is a decoding method including obtaining information on a regular prediction; generating a regular prediction block by performing the regular prediction based on the information on the regular prediction; obtaining information on an additional prediction; and generating an additional prediction block by performing the additional prediction based on the information on the additional prediction; generating a final prediction block for a current block based on a weighted averaging of the regular prediction block and the additional prediction block, wherein the regular prediction includes any one of an intra prediction, an inter prediction or an intra block copy (IBC), and wherein the additional prediction includes at least one of the intra prediction, the inter prediction or the IBC.

FIG. 12

<ref. block, P0>  <Current block, C>  <ref. block, P1>

<ref. block, P2>  <ref. block, P3>

**Description**

[Technical Field]

The present disclosure relates to a decoding method, an encoding method, and a method for transmitting image information, and relates to a method for processing multi-reference blocks.

[Background Art]

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

[Disclosure]

[Technical Problem]

The present disclosure provides a method and device for performing inter prediction based on multi-reference modes.

The present disclosure also provides a signaling method and device for determining multi-reference modes.

The present disclosure also provides a derivation method and device for determining multi-reference modes.

[Technical Solution]

According to an embodiment of the present disclosure, a decoding method includes obtaining information on a regular prediction; generating a regular prediction block by performing the regular prediction based on the information on the regular prediction; obtaining information on an additional prediction; and generating an additional prediction block by performing the additional prediction based on the information on the additional prediction; generating a final prediction block for a current block based on a weighted averaging of the regular prediction block and the additional prediction block, wherein the regular prediction includes any one of an intra prediction, an inter prediction or an intra block copy (IBC), and wherein the additional prediction includes at least one of the intra prediction, the inter prediction or the IBC.

The obtaining of the information on the additional prediction may include obtaining additional prediction availability information indicating whether or not to perform the additional prediction, obtaining mode indexing information indicating an additional prediction mode based on the additional prediction availability information, and obtaining additional block generation information for generating the additional prediction block based on the mode indexing information, wherein the additional block generation information includes at least one of intra block generation information, inter block generation information or IBC block generation information.

The obtaining of the additional block generation information for generating the additional prediction block may include obtaining the additional block generation information for generating the additional prediction block based on a preset condition being satisfied, wherein the preset condition includes at least one of: whether the additional prediction mode is allowed for a regular prediction mode, whether the additional prediction mode is allowed for a tool applied in the regular prediction mode, whether the additional prediction mode is allowed for a width or a height of the current block, whether the additional prediction mode is allowed for a quantization parameter (QP) of the current block, or whether the additional prediction mode is allowed for a temporal layer of the current block.

The obtaining of the information on the additional prediction may include obtaining additional prediction availability information indicating whether or not to perform the additional prediction, inheriting additional block generation information for generating the additional prediction block based on the additional prediction availability information, and wherein the additional block generation information includes at least one of intra block generation information, inter block generation information or IBC block generation information.

The inheriting of the additional block generation information for generating the additional prediction block may include inheriting an additional block generation information of a neighboring block with the same regular prediction mode with a regular prediction mode for the current block.

The inheriting of the additional block generation information for generating the additional prediction block may include deriving an additional prediction mode of a neighboring block with the same regular prediction mode with a regular prediction mode for the current block, and inheriting the additional block generation information for the additional prediction mode of the neighboring block selected based on a priority for inheritance of the additional prediction mode.

The inheriting of the additional block generation information for generating the additional prediction block may include deriving an additional prediction mode of a neighboring block with the same regular prediction mode with a regular prediction mode for the current block, and inheriting the additional block generation information for the additional prediction mode of the neighboring block allowed based on the regular prediction mode for the current block.

The obtaining of the information on the additional prediction may include obtaining additional prediction availability information indicating whether or not to perform the additional prediction, deriving additional block generation information for generating the additional prediction block based on the additional prediction availability information, and wherein the additional block generation information includes at least one of intra block generation information, inter block generation information or IBC block generation information.

The inheriting of the additional block generation information for generating the additional prediction block may include deriving an additional prediction mode of a neighboring block with the same regular prediction mode with a regular prediction mode for the current block, and inheriting the additional block generation information for the additional prediction mode of the neighboring block selected based on a priority for inheritance of the additional prediction mode.

The inheriting of the additional block generation information for generating the additional prediction block may include deriving an additional prediction mode of a neighboring block with the same regular prediction mode with a regular prediction mode for the current block, and inheriting the additional block generation information for the additional prediction mode of the neighboring block allowed based on the regular prediction mode for the current block.

The obtaining of the information on the additional prediction may include obtaining additional prediction availability information indicating whether or not to perform the additional prediction, deriving additional block generation information for generating the additional prediction block based on the additional prediction availability information, and wherein the additional block generation information includes at least one of intra block generation information, inter block generation information or IBC block generation information.

The deriving of the additional prediction execution information for performing the additional prediction may include deriving the additional prediction execution information using a template matching method.

The deriving of the additional prediction execution information for performing the additional prediction may include deriving the additional prediction execution information using at least one of a template-based intra mode derivation (TIMD) method or a directional intra mode derivation (DIMD) method.

The information on the additional prediction may include information on a first additional prediction and information on a second additional prediction, the additional prediction block comprises a first additional prediction block and a second additional prediction block, and the generating of the final prediction block comprises generating a final prediction block based on a weighted averaging of the regular prediction block, the first additional prediction block and the second additional prediction block.

According to an embodiment of the present disclosure, an encoding method includes encoding information on a regular prediction for generating a regular prediction block by performing the regular prediction; encoding information on an additional prediction for generating an additional prediction block by performing the additional prediction; and encoding information on a weighted averaging for generating a final prediction block for a current block based on the weighted averaging of the regular prediction block and the additional prediction block, wherein the regular prediction includes any one of an intra prediction, an inter prediction or an intra block copy (IBC), and wherein the additional prediction includes at least one of the intra prediction, the inter prediction or the IBC.

According to an embodiment of the present disclosure, a transmitting method for image information, includes encoding information on a regular prediction for generating a regular prediction block by performing the regular prediction; encoding information on an additional prediction for generating an additional prediction block by performing the additional prediction; encoding information on a weighted averaging for generating a final prediction block for a current block based on the weighted averaging of the regular prediction block and the additional prediction block; and transmitting the image information including the encoded information on the regular prediction, the encoded information on the additional prediction and the encoded information on the weighted averaging, wherein the regular prediction includes any one of an intra prediction, an inter prediction or an intra block copy (IBC), and wherein the additional prediction includes at least one of the intra prediction, the inter prediction or the IBC.

[Advantageous Effects]

According to the present disclosure, a method and device for performing inter prediction based on multi-reference modes may be provided.

According to the present disclosure, a signaling method and device for determining multi-reference modes may be provided.

According to the present disclosure, a derivation method and device for determining multi-reference modes may be provided.

Effects which can be achieved by the present disclosure are not limited to the above-described effects. Other effects that are not described may be obviously understood by those skilled in the art to which the present disclosure pertains from the following description.

[Description of Drawings]

FIG. 1 is a view schematically showing a video coding system, to which an embodiment of the present disclosure is applicable.

FIG. 2 is a view schematically showing an image encoding apparatus, to which an embodiment of the present disclosure is applicable.

FIG. 3 is a view schematically showing an image decoding apparatus, to which an embodiment of the present disclosure is applicable.

FIG. 4 illustrates an example of an intra-template matching prediction-based video/image encoding method to which an embodiment of the present disclosure may be applied.

FIG. 5 illustrates an example of an inter prediction-based video/image encoding method to which an embodiment of the present disclosure may be applied.

FIG. 6 illustrates an example of an inter prediction-based video/image encoding method to which an embodiment of the present disclosure may be applied.

FIG. 7 illustrates an inter prediction procedure to which an embodiment of the present disclosure may be applied.

FIG. 8 is a diagram illustrating spatial candidates used in an inter prediction procedure to which an embodiment of the present disclosure may be applied.

FIG. 9 is a diagram for describing affine motion prediction used in an inter prediction procedure to which an embodiment of the present disclosure may be applied.

FIG. 10 is a diagram for describing template matching to which an embodiment of the present disclosure may be applied.

FIG. 11 illustrates an inter prediction method performed by a decoding device according to an embodiment of the present disclosure.

FIG. 12 is a diagram illustrating a reference block used in a multi-reference mode according to an embodiment of the present disclosure.

FIG. 13 is a diagram illustrating a method of signaling information about an additional reference block used in the multi-reference mode according to an embodiment of the present disclosure.

FIG. 14 is a diagram illustrating a combination between a basic block mode and an additional reference block mode according to an embodiment of the present disclosure.

FIG. 15 is a diagram illustrating a method of signaling information about an additional reference block used in the multi-reference mode according to an embodiment of the present disclosure.

FIG. 16 is a diagram illustrating a method of deriving an additional reference block based on template matching used in a multi-reference mode according to an embodiment of the present disclosure.

FIG. 17 is a diagram illustrating a method of deriving an additional reference block based on an intra-template matching prediction used in a multi-reference mode according to an embodiment of the present disclosure.

FIG. 18 is a diagram illustrating a method of deriving an additional reference block based on a template-based intra mode derivation (TIMD) used in a multi-reference mode according to an embodiment of the present disclosure.

FIG. 19 is a diagram illustrating a method of calculating an error (or cost) for deriving an additional reference block in a multi-reference mode according to an embodiment of the present disclosure.

FIG. 20 illustrates a decoding method according to an embodiment of the present disclosure.

FIG. 21 illustrates an encoding method according to an embodiment of the present disclosure.

FIG. 22 is a view showing a content streaming system to which an embodiment of the present disclosure is applicable.

[Best Mode]

Since the present disclosure may make various changes and have several embodiments, specific embodiments will be illustrated in a drawing and described in detail in a detailed description. However, it is not intended to limit the present disclosure to a specific embodiment, and should be understood to include all changes, equivalents and substitutes included in the spirit and technical scope of the present disclosure. While describing each drawing, similar reference numerals are used for similar components.

A term such as first, second, etc. may be used to describe various components, but the components should not be limited by the terms. The terms are used only to distinguish one component from other components. For example, a first component may be referred to as a second component without departing from the scope of a right of the present disclosure, and similarly, a second component may also be referred to as a first component. A term of and/or includes any of a plurality of related stated items or a combination of a plurality of related stated items.

When a component is referred to as "being connected" or "being linked" to another component, it should be understood that it may be directly connected or linked to another component, but another component may exist in the middle. On the other hand, when a component is referred to as "being directly connected" or "being directly linked" to another component, it should be understood that there is no another component in the middle.

A term used in this application is just used to describe a specific embodiment, and is not intended to limit the present disclosure. Singular expressions include plural expressions unless the context clearly dictates otherwise. In this application, it should be understood that a term such as "include" or "have", etc. is intended to designate the presence of features, numbers, steps, operations, components, parts or combinations thereof described in the specification, but does not exclude in advance the possibility of presence or addition of one or more other features, numbers, steps, operations, components, parts or combinations thereof.

The present disclosure relates to video/image coding. For example, a method/an embodiment disclosed herein may be applied to a method disclosed in the versatile video coding (VVC) standard. In addition, a method/an embodiment disclosed herein may be applied to a method disclosed in the essential video coding (EVC) standard, the AOMedia Video 1 (AV1) standard, the 2nd generation of audio video coding standard (AVS2) or the next-generation video/image coding standard (ex. H.267 or H.268, etc.).

This specification proposes various embodiments of video/image coding, and unless otherwise specified, the embodiments may be performed in combination with each other.

Herein, a video may refer to a set of a series of images over time. A picture generally refers to a unit representing one image in a specific time period, and a slice/a tile is a unit that forms part of a picture in coding. A slice/a tile may include at least one coding tree unit (CTU). One picture may consist of at least one slice/tile. One tile is a rectangular area composed of a plurality of CTUs within a specific tile column and a specific tile row of one picture. A tile column is a rectangular area of CTUs having the same height as that of a picture and a width designated by a syntax requirement of a picture parameter set. A tile row is a rectangular area of CTUs having a height designated by a picture parameter set and the same width as that of a picture. CTUs within one tile may be arranged consecutively according to CTU raster scan, while tiles within one picture may be arranged consecutively according to raster scan of a tile. One slice may include an integer number of complete tiles or an integer number of consecutive complete CTU rows within a tile of a picture that may be included exclusively in a single NAL unit. Meanwhile, one picture may be divided into at least two sub-pictures. A sub-picture may be a rectangular area of at least one slice within a picture.

A pixel, a pixel or a pel may refer to the minimum unit that constitutes one picture (or image). In addition, 'sample' may be used as a term corresponding to a pixel. A sample may generally represent a pixel or a pixel value, and may represent only a pixel/a pixel value of a luma component, or only a pixel/a pixel value of a chroma component.

A unit may represent a basic unit of image processing. A unit may include at least one of a specific area of a picture and information related to a corresponding area. One unit may include one luma block and two chroma (ex. cb, cr) blocks. In some cases, a unit may be used interchangeably with a term such as a block or an area, etc. In a general case, a $M \times N$ block may include a set (or an array) of transform coefficients or samples (or sample arrays) consisting of M columns and N rows.

Herein, "A or B" may refer to "only A", "only B" or "both A and B." In other words, herein, "A or B" may be interpreted as "A and/or B." For example, herein, "A, B or C" may refer to "only A", "only B", "only C" or "any combination of A, B and C)".

A slash (/) or a comma used herein may refer to "and/or." For example, "A/B" may refer to "A and/or B." Accordingly, "A/B" may refer to "only A", "only B" or "both A and B." For example, "A, B, C" may refer to "A, B, or C".

Herein, "at least one of A and B" may refer to "only A", "only B" or "both A and B". In addition, herein, an expression such as "at least one of A or B" or "at least one of A and/or B" may be interpreted in the same way as "at least one of A and B".

In addition, herein, "at least one of A, B and C" may refer to "only A", "only B", "only C", or "any combination of A, B and C". In addition, "at least one of A, B or C" or "at least one of A, B and/or C" may refer to "at least one of A, B and C".

In addition, a parenthesis used herein may refer to "for example." Specifically, when indicated as "prediction (intra prediction)", "intra prediction" may be proposed as an example of "prediction". In other words, "prediction" herein is not limited to "intra prediction" and "intra prediction" may be proposed as an example of "prediction." In addition, even when indicated as "prediction (i.e., intra prediction)", "intra prediction" may be proposed as an example of "prediction."

Herein, a technical feature described individually in one drawing may be implemented individually or simultaneously.

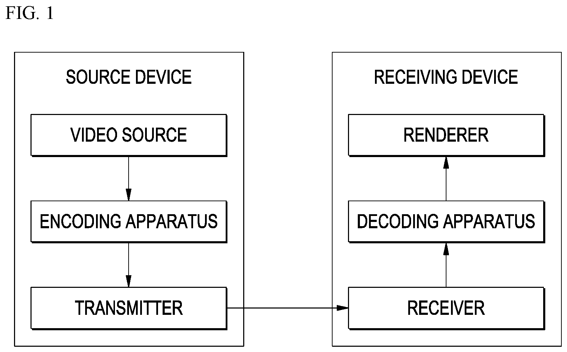

FIG. 1 shows a video/image coding system according to the present disclosure.

Referring to FIG. 1, a video/image coding system may include a first device (a source device) and a second device (a receiving device).

A source device may transmit encoded video/image information or data in a form of a file or streaming to a receiving device through a digital storage medium or a network. The source device may include a video source, an encoding device and a transmission unit. The receiving device may include a reception unit, a decoding device and a renderer. The encoding device may be referred to as a video/image encoding device and the decoding device may be referred to as a video/image decoding device. A transmitter may be included in an encoding device. A receiver may be included in a decoding device. A renderer may include a display unit, and a display unit may be composed of a separate device or an external component.

A video source may acquire a video/an image through a process of capturing, synthesizing or generating a video/an image. A video source may include a device of capturing a video/an image and a device of generating a video/an image. A device of capturing a video/an image may include at least one camera, a video/image archive including previously captured videos/images, etc. A device of generating a video/an image may include a computer, a tablet, a smartphone, etc. and may (electronically) generate a video/an image. For example, a virtual video/image may be generated through a computer, etc., and in this case, a process of capturing a video/an image may be replaced by a process of generating related data.

An encoding device may encode an input video/image. An encoding device may perform a series of procedures such as prediction, transform, quantization, etc. for compression and coding efficiency. Encoded data (encoded video/-image information) may be output in a form of a bitstream.

A transmission unit may transmit encoded video/image information or data output in a form of a bitstream to a reception unit of a receiving device through a digital storage medium or a network in a form of a file or streaming. A digital storage medium may include various storage media such as USB, SD, CD, DVD, Blu-ray, HDD, SSD, etc. A transmission unit may include an element for generating a media file through a predetermined file format and may include an element for transmission through a broadcasting/communication network. A reception unit may receive/extract the bitstream and transmit it to a decoding device.

A decoding device may decode a video/an image by performing a series of procedures such as dequantization, inverse transform, prediction, etc. corresponding to an operation of an encoding device.

A renderer may render a decoded video/image. A rendered video/image may be displayed through a display unit.

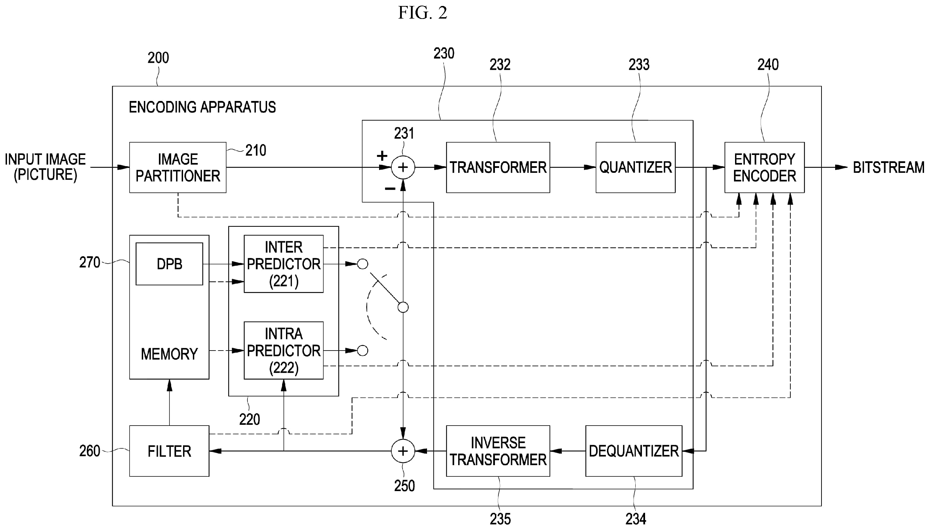

FIG. 2 shows a rough block diagram of an encoding device to which an embodiment of the present disclosure may be applied and encoding of a video/image signal is performed.

Referring to FIG. 2, an encoding device 200 may be composed of an image partitioner 210, a predictor 220, a residual processor 230, an entropy encoder 240, an adder 250, a filter 260 and a memory 270. A predictor 220 may include an inter predictor 221 and an intra predictor 222. A residual processor 230 may include a transformer 232, a quantizer 233, a dequantizer 234 and an inverse transformer 235. A residual processor 230 may further include a subtractor 231. An adder 250 may be referred to as a reconstructor or a reconstructed block generator. The above-described image partitioner 210, predictor 220, residual processor 230, entropy encoder 240, adder 250 and filter 260 may be configured by at least one hardware component (e.g., an encoder chipset or a processor) according to an embodiment. In addition, a memory 270 may include a decoded picture buffer (DPB) and may be configured by a digital storage medium. The hardware component may further include a memory 270 as an internal/external component.

An image partitioner 210 may partition an input image (or picture, frame) input to an encoding device 200 into at least one processing unit. As an example, the processing unit may be referred to as a coding unit (CU). In this case, a coding unit may be partitioned recursively according to a quad-tree binary-tree ternary-tree (QTBTTT) structure from a coding tree unit (CTU) or the largest coding unit (LCU).

For example, one coding unit may be partitioned into a plurality of coding units with a deeper depth based on a quad tree structure, a binary tree structure and/or a ternary structure. In this case, for example, a quad tree structure may be applied first and a binary tree structure and/or a ternary structure may be applied later. Alternatively, a binary tree structure may be applied before a quad tree structure. A coding procedure according to this specification may be performed based on a final coding unit that is no longer partitioned. In this case, based on coding efficiency, etc. according to an image characteristic, the largest coding unit may be directly used as a final coding unit, or if necessary, a coding unit may be recursively partitioned into coding units of a deeper depth, and a coding unit with an optimal size may be used as a final coding unit. Here, a coding procedure may include a procedure such as prediction, transform, and reconstruction, etc. described later.

As another example, the processing unit may further include a prediction unit (PU) or a transform unit (TU). In this case, the prediction unit and the transform unit may be divided or partitioned from a final coding unit described above, respectively. The prediction unit may be a unit of sample prediction, and the transform unit may be a unit for deriving a transform coefficient and/or a unit for deriving a residual signal from a transform coefficient.

In some cases, a unit may be used interchangeably with a term such as a block or an area, etc. In a general case, a M×N block may represent a set of transform coefficients or samples consisting of M columns and N rows. A sample may generally represent a pixel or a pixel value, and may represent only a pixel/a pixel value of a luma component, or only a pixel/a pixel value of a chroma component. A sample may be used as a term that makes one picture (or image) correspond to a pixel or a pel.

An encoding device 200 may subtract a prediction signal (a prediction block, a prediction sample array) output from an inter predictor 221 or an intra predictor 222 from an input image signal (an original block, an original sample array) to generate a residual signal (a residual signal, a residual sample array), and a generated residual signal is transmitted to a transformer 232. In this case, a unit that subtracts a prediction signal (a prediction block, a prediction sample array) from an input image signal (an original block, an original sample array) within an encoding device 200 may be referred to as a subtractor 231.

A predictor 220 may perform prediction on a block to be processed (hereinafter, referred to as a current block) and generate a predicted block including prediction samples for the current block. A predictor 220 may determine whether intra prediction or inter prediction is applied in a unit of a current block or a CU. A predictor 220 may generate various information on prediction such as prediction mode information, etc. and transmit it to an entropy encoder 240 as described later in a description of each prediction mode. Information on prediction may be encoded in an entropy encoder 240 and output in a form of a bitstream.

An intra predictor 222 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. A nondirectional mode may include at least one of a DC mode or a planar mode. A directional mode may include 33 directional modes or 65 directional modes according to a detail level of a prediction direction. However, it is an example, and more or less directional modes may be used according to a configuration. An intra predictor 222 may determine a prediction mode applied to a current block by using a prediction mode applied to a neighboring block.

An inter predictor 221 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. A reference picture including the reference block and a reference picture including the temporal neighboring block may be the same or different. The temporal neighboring block may be referred to as a collocated reference block, a collocated CU (colCU), etc., and a reference picture including the temporal neighboring block may be referred to as a collocated picture (colPic). For example, an inter predictor 221 may configure a motion information candidate list based on neighboring blocks and generate information indicating which candidate is used to derive a motion vector and/or a reference picture index of the current block. Inter prediction may be performed based on various prediction modes, and for example, for a skip mode and a merge mode, an inter predictor 221 may use motion information of a neighboring block as motion information of a current block. For a skip mode, unlike a merge mode, a residual signal may not be transmitted. For a motion vector prediction (MVP) mode, a motion vector of a surrounding block is used as a motion vector predictor and a motion vector difference is signaled to indicate a motion vector of a current block.

A predictor 220 may generate a prediction signal based on various prediction methods described later. For example, a predictor may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, a sample value within a picture may be signaled based on information on a palette table and a palette index. A prediction signal generated through the predictor 220 may be used to generate a reconstructed signal or a residual signal.

A transformer 232 may generate transform coefficients by applying a transform technique to a residual signal. For example, a transform technique may include at least one of Discrete Cosine Transform (DCT), Discrete Sine Transform (DST), Karhunen-Loève Transform (KLT), Graph-Based Transform (GBT) or Conditionally Non-linear Transform (CNT). Here, GBT refers to transform obtained from this graph when relationship information between pixels is expressed as a graph. CNT refers to transform obtained based on generating a prediction signal by using all previously reconstructed pixels. In addition, a transform process may be applied to a square pixel block in the same size or may be applied to a non-square block in a variable size.

A quantizer 233 may quantize transform coefficients and transmit them to an entropy encoder 240 and an entropy encoder 240 may encode a quantized signal (information on quantized transform coefficients) and output it as a bitstream. Information on the quantized transform coefficients may be referred to as residual information. A quantizer 233 may rearrange quantized transform coefficients in a block form into an one-dimensional vector form based on coefficient scan order, and may generate information on the quantized transform coefficients based on the quantized transform coefficients in the one-dimensional vector form.

An entropy encoder 240 may perform various encoding methods such as exponential Golomb, context-adaptive variable length coding (CAVLC), context-adaptive binary arithmetic coding (CABAC), etc. An entropy encoder 240 may encode information necessary for video/image reconstruction (e.g., a value of syntax elements, etc.) other than quantized transform coefficients together or separately.

Encoded information (ex. encoded video/image information) may be transmitted or stored in a unit of a network abstraction layer (NAL) unit in a bitstream form. The video/image information may further include information on various parameter sets such as an adaptation parameter set (APS), a picture parameter set (PPS), a sequence parameter set (SPS) or a video parameter set (VPS), etc. In addition, the video/image information may further include general constraint information. Herein, information and/or syntax elements transmitted/signaled from an encoding device to a decoding device may be included in video/image information. The video/image information may be encoded through the above-described encoding procedure and included in the bitstream. The bitstream may be transmitted through a network or may be stored in a digital storage medium. Here, a network may include a broadcasting network and/or a communication network, etc. and a digital storage medium may include various storage media such as USB, SD, CD, DVD, Blu-ray, HDD, SSD, etc. A transmission unit (not shown) for transmitting and/or a storage unit (not shown) for storing a signal output from an entropy encoder 240 may be configured as an internal/external element of an encoding device 200, or a transmission unit may be also included in an entropy encoder 240.

Quantized transform coefficients output from a quantizer 233 may be used to generate a prediction signal. For example, a residual signal (a residual block or residual samples) may be reconstructed by applying dequantization and inverse transform to quantized transform coefficients through a dequantizer 234 and an inverse transformer 235. An adder 250 may add a reconstructed residual signal to a prediction signal output from an inter predictor 221 or an intra predictor 222 to generate a reconstructed signal (a reconstructed picture, a reconstructed block, a reconstructed sample array). When there is no residual for a block to be processed like when a skip mode is applied, a predicted block may be used as a reconstructed block. An adder 250 may be referred to as a reconstructor or a reconstructed block generator. A generated reconstructed signal may be used for intra prediction of a next block to be processed within a current picture, and may be also used for inter prediction of a next picture through filtering as described later. Meanwhile, luma mapping with chroma scaling (LMCS) may be applied in a picture encoding and/or reconstruction process.

A filter 260 may improve subjective/objective image quality by applying filtering to a reconstructed signal. For example, a filter 260 may generate a modified reconstructed picture by applying various filtering methods to a reconstructed picture, and may store the modified reconstructed picture in a memory 270, specifically in a DPB of a memory 270. The various filtering methods may include deblocking filtering, sample adaptive offset, adaptive loop filter, bilateral filter, etc. A filter 260 may generate various information on filtering and transmit it to an entropy encoder 240. Information on filtering may be encoded in an entropy encoder 240 and output in a form of a bitstream.

A modified reconstructed picture transmitted to a memory 270 may be used as a reference picture in an inter predictpr 221. When inter prediction is applied through it, an encoding device may avoid prediction mismatch in an encoding device 200 and a decoding device, and may also improve encoding efficiency.

A DPB of a memory 270 may store a modified reconstructed picture to use it as a reference picture in an inter predictor 221. A memory 270 may store motion information of a block from which motion information in a current picture is derived (or encoded) and/or motion information of blocks in a pre-reconstructed picture. The stored motion information may be transmitted to an inter predictor 221 to be used as motion information of a spatial neighboring block or motion information of a temporal neighboring block. A memory 270 may store reconstructed samples of reconstructed blocks in a current picture and transmit them to an intra predictor 222.

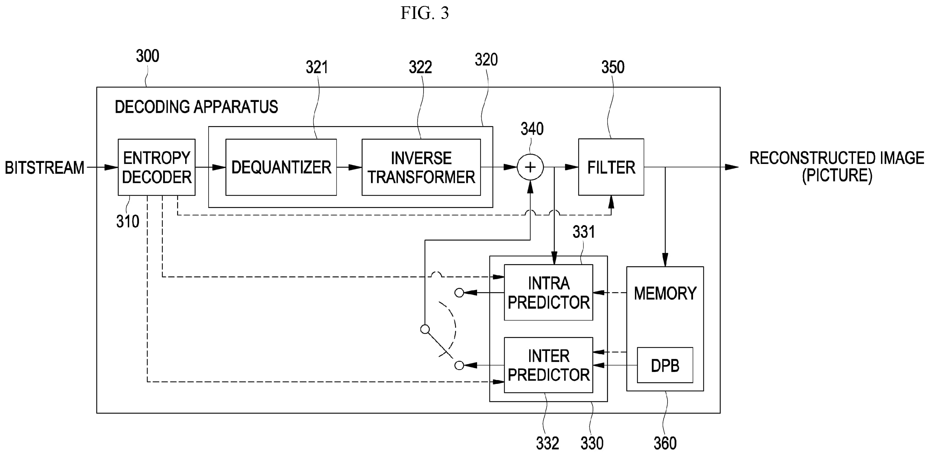

FIG. 3 shows a rough block diagram of a decoding device to which an embodiment of the present disclosure may be applied and decoding of a video/image signal is performed.

Referring to FIG. 3, a decoding device 300 may be configured by including an entropy decoder 310, a residual processor 320, a predictor 330, an adder 340, a filter 350 and a memory 360. A predictor 330 may include an inter predictor 332 and an intra predictor 331. A residual processor 320 may include a dequantizer 321 and an inverse transformer 321.

According to an embodiment, the above-described entropy decoder 310, residual processor 320, predictor 330, adder 340 and filter 350 may be configured by one hardware component (e.g., a decoder chipset or a processor). In addition, a memory 360 may include a decoded picture buffer (DPB) and may be configured by a digital storage medium. The hardware component may further include a memory 360 as an internal/external component.

When a bitstream including video/image information is input, a decoding device 300 may reconstruct an image in response to a process in which video/image information is processed in an encoding device of FIG. 2. For example, a decoding device 300 may derive units/blocks based on block partition-related information obtained from the bitstream. A decoding device 300 may perform decoding by using a processing unit applied in an encoding device. Accordingly, a processing unit of decoding may be a coding unit, and a coding unit may be partitioned from a coding tree unit or the largest coding unit according to a quad tree structure, a binary tree structure and/or a ternary tree structure. At least one transform unit may be derived from a coding unit. And, a reconstructed image signal decoded and output through a decoding device 300 may be played through a playback device.

A decoding device 300 may receive a signal output from an encoding device of FIG. 2 in a form of a bitstream, and a received signal may be decoded through an entropy decoder 310. For example, an entropy decoder 310 may parse the bitstream to derive information (ex. video/image information) necessary for image reconstruction (or picture reconstruction). The video/image information may further include information on various parameter sets such as an adaptation parameter set (APS), a picture parameter set (PPS), a sequence parameter set (SPS) or a video parameter set (VPS), etc. In addition, the video/image information may further include general constraint information. A decoding device may decode a picture further based on information on the parameter set and/or the general constraint information. Signaled/received information and/or syntax elements described later herein may be decoded through the decoding procedure and obtained from the bitstream. For example, an entropy decoder 310 may decode information in a bitstream based on a coding method such as exponential Golomb encoding, CAVLC, CABAC, etc. and output a value of a syntax element necessary for image reconstruction and quantized values of a transform coefficient regarding a residual. In more detail, a CABAC entropy decoding method may receive a bin corresponding to each syntax element from a bitstream, determine a context model by using syntax element information to be decoded, decoding information of a surrounding block and a block to be decoded or information of a symbol/a bin decoded in a previous step, perform arithmetic decoding of a bin by predicting a probability of occurrence of a bin according to a determined context model and generate a symbol corresponding to a value of each syntax element. In this case, a CABAC entropy decoding method may update a context model by using information on a decoded symbol/bin for a context model of a next symbol/bin after determining a context model. Among information decoded in an entropy decoder 310, information on prediction is provided to a predictor (an inter predictor 332 and an intra predictor 331), and a residual value on which entropy decoding was performed in an entropy decoder 310, i.e., quantized transform coefficients and related parameter information may be input to a residual processor 320. A residual processor 320 may derive a residual signal (a residual block, residual samples, a residual sample array). In addition, information on filtering among information decoded in an entropy decoder 310 may be provided to a filter 350. Meanwhile, a reception unit (not shown) that receives a signal output from an encoding device may be further configured as an internal/external element of a decoding device 300 or a reception unit may be a component of an entropy decoder 310.

Meanwhile, a decoding device according to this specification may be referred to as a video/image/picture decoding device, and the decoding device may be divided into an information decoder (a video/image/picture information decoder) and a sample decoder (a video/image/picture sample decoder). The information decoder may include the entropy decoder 310 and the sample decoder may include at least one of dequantizer 321, the inverse transformer 322, the adder 340, the filter 350, the memory 360, the inter predictor 332 and the intra predictor 331.

A dequantizer 321 may dequantize quantized transform coefficients and output transform coefficients. A dequantizer 321 may rearrange quantized transform coefficients into a two-dimensional block form. In this case, the rearrangement may be performed based on coefficient scan order performed in an encoding device. A dequantizer 321 may perform dequantization on quantized transform coefficients by using a quantization parameter (e.g., quantization step size information) and obtain transform coefficients.

An inverse transformer 322 inversely transforms transform coefficients to obtain a residual signal (a residual block, a residual sample array).

A predictor 320 may perform prediction on a current block and generate a predicted block including prediction samples for the current block. A predictor 320 may determine whether intra prediction or inter prediction is applied to the current block based on the information on prediction output from an entropy decoder 310 and determine a specific intra/inter prediction mode.

A predictor 320 may generate a prediction signal based on various prediction methods described later. For example, a predictor 320 may not only apply intra prediction or inter prediction for prediction for one block, but also may apply intra prediction and inter prediction simultaneously. It may be referred to as a combined inter and intra prediction (CIIP) mode. In addition, a predictor may be based on an intra block copy (IBC) prediction mode or may be based on a palette mode for prediction for a block. The IBC prediction mode or palette mode may be used for content image/video coding of a game, etc. such as screen content coding (SCC), etc. IBC basically performs prediction within a current picture, but it may be performed similarly to inter prediction in that it derives a reference block within a current picture. In other words, IBC may use at least one of inter prediction techniques described herein. A palette mode may be considered as an example of intra coding or intra prediction. When a palette mode is applied, information on a palette table and a palette index may be included in the video/image information and signaled.

An intra predictor 331 may predict a current block by referring to samples within a current picture. The samples referred to may be positioned in the neighborhood of the current block or may be positioned a certain distance away from the current block according to a prediction mode. In intra prediction, prediction modes may include at least one nondirectional mode and a plurality of directional modes. An intra predictor 331 may determine a prediction mode applied to a current block by using a prediction mode applied to a neighboring block.

An inter predictor 332 may derive a prediction block for a current block based on a reference block (a reference sample array) specified by a motion vector on a reference picture. In this case, in order to reduce the amount of motion information transmitted in an inter prediction mode, motion information may be predicted in a unit of a block, a sub-block or a sample based on the correlation of motion information between a neighboring block and a current block. The motion information may include a motion vector and a reference picture index. The motion information may further include inter prediction direction information (L0 prediction, L1 prediction, Bi prediction, etc.). For inter prediction, a neighboring block may include a spatial neighboring block existing in a current picture and a temporal neighboring block existing in a reference picture. For example, an inter predictor 332 may configure a motion information candidate list based on neighboring blocks and derive a motion vector and/or a reference picture index of the current block based on received candidate selection information. Inter prediction may be performed based on various prediction modes, and the information on prediction may include information indicating an inter prediction mode for the current block.

An adder 340 may add an obtained residual signal to a prediction signal (a prediction block, a prediction sample array) output from a predictor (including an inter predictor 332 and/or an intra predictor 331) to generate a reconstructed signal (a reconstructed picture, a reconstructed block, a reconstructed sample array). When there is no residual for a block to be processed like when a skip mode is applied, a prediction block may be used as a reconstructed block.

An adder 340 may be referred to as a reconstructor or a reconstructed block generator. A generated reconstructed signal may be used for intra prediction of a next block to be processed in a current picture, may be output through filtering as described later or may be used for inter prediction of a next picture. Meanwhile, luma mapping with chroma scaling (LMCS) may be applied in a picture decoding process.

A filter 350 may improve subjective/objective image quality by applying filtering to a reconstructed signal. For example, a filter 350 may generate a modified reconstructed picture by applying various filtering methods to a reconstructed picture and transmit the modified reconstructed picture to a memory 360, specifically a DPB of a memory 360. The various filtering methods may include deblocking filtering, sample adaptive offset, adaptive loop filter, bilateral filter, etc.

The (modified) reconstructed picture stored in the DPB of the memory 360 can be used as a reference picture in the inter prediction unit 332. A memory 360 may store motion information of a block from which motion information in a current picture is derived (or decoded) and/or motion information of blocks in a pre-reconstructed picture. The stored motion information may be transmitted to an inter predictor 332 to be used as motion information of a spatial neighboring block or motion information of a temporal neighboring block. A memory 360 may store reconstructed samples of reconstructed blocks in a current picture and transmit them to an intra predictor 331.

Herein, embodiments described in a filter 260, an inter predictor 221 and an intra predictor 222 of an encoding device 200 may be also applied equally or correspondingly to a filter 350, an inter predictor 332 and an intra predictor 331 of a decoding device 300, respectively.

## Intra prediction

The prediction unit of the encoding/decoding device may derive a reference sample from among the neighboring reference samples of the current block according to the intra prediction mode of the current block, and generate the predicted sample of the current block based on the reference sample.

For example, the prediction unit of the encoding/decoding device may derive (i) the predicted sample based on the average or interpolation of the neighboring reference samples of the current block, and (ii) the predicted sample based on a reference sample existing in a specific (prediction) direction with respect to a predicted sample among the neighboring reference samples of the current block. The case of (i) may be called a non-directional mode or a non-angular mode, and the case of (ii) may be called a directional mode or an angular mode.

Furthermore, the prediction unit of the encoding/decoding device may generate the predicted sample by interpolating a first neighboring sample with a second neighboring sample, which is located in a direction opposite to the prediction direction of the intra prediction mode of the current block, based on the predicted sample of the current block among the neighboring reference samples. The above-described case may be referred to as linear interpolation intra prediction (LIP).

Furthermore, the prediction unit of the encoding/decoding device may derive a temporary predicted sample for the current block based on the filtered neighboring reference samples, and derive the predicted sample for the current block by weighting the temporary predicted sample with at least one reference sample derived according to the intra prediction mode among the existing neighboring reference samples, that is, unfiltered neighboring reference samples. The above-described case may be called position dependent intra prediction (PDPC).

In addition, the prediction unit of the encoding device/decoding device may select a reference sample line having the highest prediction accuracy among the multi-neighboring reference sample lines of the current block, thereby deriving the predicted sample using the reference sample located in the prediction direction in the corresponding line. In this case, the prediction unit of the encoding device/decoding device may perform the intra prediction encoding by instructing (signaling) the used reference sample line to the decoding apparatus. The above-described case may be called multi-reference line (MRL) intra prediction or MRL-based intra prediction.

In addition, the prediction unit of the encoding device/decoding device may divide the current block into vertical or horizontal sub-partitions to perform the intra prediction based on the same intra prediction mode, but derive and use the neighboring reference samples in units of the sub-partitions. That is, in this case, the intra prediction mode for the current block may be equally applied to the sub-partitions, but the intra prediction performance may be improved in some cases by deriving and using the peripheral reference samples in units of sub-partitions. This prediction method may be called intra sub-partitions (ISP) or ISP-based intra prediction.

Furthermore, when the prediction direction relative to the predicted sample points between the neighboring reference samples, i.e., when the prediction direction points to a fractional sample location, the value of the predicted sample may be derived through interpolation of multi-reference samples located around the corresponding prediction direction (around the corresponding fractional sample location).

The above-described intra prediction methods may be called an intra prediction type to be distinguished from the intra prediction mode. The intra prediction type may be referred to by various terms such as an intra prediction technique or an additional intra prediction mode. For example, the intra prediction type (or additional intra prediction mode, etc.) may include at least one of the above-described LIP, PDPC, MRL, and ISP.

Information about the intra prediction type may be encoded by the encoding device, included in the bitstream, and signaled to the decoding device. The intra prediction type information may be implemented in various forms, such as flag information indicating whether each intra prediction type is applicable or index information indicating one of several intra prediction types.

A most probable mode (MPM) list for deriving the intra prediction mode described above may be configured differently depending on the intra prediction type. Alternatively, the MPM list may be configured universally regardless of the intra prediction type.

Furthermore, in decoder-side intra-mode derivation (DIMD), the intra prediction is derived as a weighted average between a planar predictor and two derived directional predictors. Two angular modes are selected from a histogram of gradients (HoG) calculated from adjacent pixels in the current block. Once two modes are selected, the corresponding predictor and planar predictor are each derived. Thereafter, the weighted average between the blocks is used as a final predictor. The corresponding amplitudes of the gradient histogram (HoG) for each mode are used to determine the weights.

The derived intra modes are included in a basic list of most probable intra modes (MPMs), so the DIMD process is performed before the MPM list is constructed. The basic derived intra modes of the DIMD block are stored with the block and used to construct the MPM list for adjacent blocks.

Furthermore, for each intra prediction mode of the MPM, the sum of absolute transformed differences (SATD) between predicted samples of the template and the reconstructed samples is calculated. The first two intra prediction modes with the minimum SATD are selected as the TIMD modes. These two TIMD modes are weighted, and the weighted intra predictions are used to code the current CU. Position-dependent intra prediction combinations (PDPCs) are included in the derivation of the TIMD modes.

The costs of the two selected modes are compared with a threshold, and two cost factors satisfying [Equation 1] are applied in the test:

$$[\text{Equation 1}]$$

$$\text{costMode2} < 2*\text{costMode1}.$$

If the condition in [Equation 1] is true, fusion is applied; otherwise, only Mode 1 is used.

The mode weight is calculated from the SATD cost as shown in [Equation 2]:

$$[\text{Equation 2}]$$

$$\text{weight1} = \text{costMode2}/(\text{costMode1} + \text{costMode2})$$

$$\text{weight2} = 1 - \text{weight1}$$

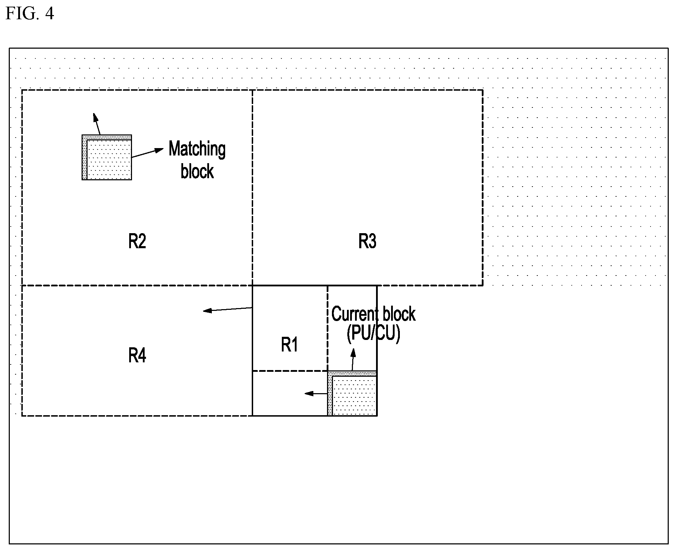

FIG. 4 illustrates an example of an intra-template matching prediction-based video/image encoding method to which an embodiment of the present disclosure may be applied.

An intra-templet matching prediction (IntraTMP) is a special intra prediction mode that copies the optimal predicted block where the current template matches an L-shaped template from the reconstructed portion of the current frame. The encoder searches for the template most similar to the current template in the reconstructed portion of the current frame within the predefined search range and uses that block as the predicted block. Next, the encoder signals the use of the mode, and the same prediction operation is performed on the decoder side.

The prediction signal is generated by matching the L-shaped causal neighbors of the current block with other blocks in the predefined search region of FIG. 4, as follows:

R1: Current CTU
R2: Top-left CTU
R3: Top CTU
R4: Left CTU

A sum of absolute differences (SAD) is used as the cost function.

Within each region, the decoder searches for the template with the smallest SAD compared to the current template and uses that block as the predicted block.

The dimensions of each region (SearchRange_w, SearchRange_h) are set in proportion to the block dimensions (BlkW, BlkH) to ensure the fixed number of SAD comparisons per pixel. That is, this is the same as Equation 3.

$$[\text{Equation 3}]$$

$$SearchRange\_w = a * BlkW$$

$$SearchRange\_h = a * BlkH$$

Here, 'a'' is a constant that controls the gain/complexity tradeoff. In practice, 'a' may be equal to 5.

The number of template matching calculations may be reduced to 1/4 by subsampling the search positions in all search regions within the template by 2. After finding the optimal match, a refinement process is performed. The refinement is performed through a second template matching search centered on the optimal match with the reduced range. The reduced range is defined as min(BlkW, BlkH)/2.

The intra-template matching tool is enabled for CU with a width and height of 64 or less. The maximum coding unit size for the intra-template matching is configurable.

The intra-templete matching prediction mode is signaled at the coding unit level via a dedicated flag when the DIMD is not used in the current coding unit.

The block vector (BV) derived from the intra-templete matching prediction (IntraTMP) may be used for intra block copy (IBC). The IntraTMP block vector (BV) of the stored adjacent block is used as a spatial block vector (BV) candidate in constructing the IBC candidate list, along with the IBC block vector (BV).

The IntraTMP block vector is stored in the IBC block vector buffer. The current IBC block may use both the IBC block vector (BV) and the IntraTMP block vector (BV) of adjacent blocks as block vector (BV) candidates for the IBC block vector (BV) candidate list.

**Intra block copy (IBC)**

The intra block copy (IBC) is well known to significantly improve the coding efficiency of screen content. Since the IBC mode is implemented as a block-level coding mode, the encoder performs the block matching (BM) to find the optimal block vector (or motion vector) for each CU. Here, the block vector is used to indicate the displacement from the current block to a reference block already reconstructed within the current image. The luma block vector of the IBC-coded coding unit has integer precision. A chroma block vector is also rounded to integer precision. When combined with AMVR, the IBC mode may switch between 1-pixel and 4-pixel motion vector precision. The IBC-coded coding unit is treated as a third prediction mode other than the intra or inter prediction modes. The IBC mode may be applied to coding units with both a width and height less than 64 luma samples.

On the encoder side, hash-based motion estimation is performed for the IBC. The encoder performs an RD check on blocks whose width or height is no greater than 16 luma samples. When not in merge mode, the block vector search is performed first using the hash-based search. When the hash search does not return a valid candidate, the block matching-based local search is performed.

In the hash-based search, the hash key matching (32-bit CRC) between the current block and the reference block is extended to all allowed block sizes. The hash key calculation for each location in the current picture is based on $4\times4$ sub-blocks. For a larger current block, it is determined that the hash key matches that of the reference block when the hash keys of all $4\times4$ sub-blocks match the hash keys at the corresponding reference positions. When the hash keys of multi-reference blocks are found to match the hash keys of the current block, the block vector cost of each matching reference is calculated and the block with the minimum cost is selected.

In the block matching search, the search range is set to include both the previous and current CTUs.

At the coding unit level, the IBC mode is signaled with a flag, and may be signaled as an IBC AMVP mode or an IBC skip/merge mode, as follows.

IBC skip/merge mode: A merge candidate index is used to indicate a block vector, among block vectors in a list of adjacent candidate IBC-coded blocks, that is used to predict a current block. The merge list is composed of spatial, HMVP, and pairwise candidates.

IBC AMVP mode: A block vector difference is coded in the same manner as a motion vector difference. A block vector prediction method uses two candidates as predictors, one from a left neighboring block and the other from an upper neighboring block (when IBC-coded). When either of the two neighboring blocks is unavailable, a basic block vector is used as a predictor. A flag indicating a block vector predictor index is signaled.

**Inter prediction**

Meanwhile, when the inter prediction is applied, the prediction unit of the encoding device/decoding device may perform inter prediction on a block-by-block basis to derive predicted samples. The inter prediction may represent a prediction derived in a manner dependent on data elements (e.g., sample values or motion information) of picture(s) other than the current picture. When the inter prediction is applied to the current block, the predicted block (a predicted sample array) for the current block may be derived based on the reference block (the reference sample array) specified by the motion vector on the reference picture indicated by the reference picture index.

In this case, in order to reduce the amount of motion information transmitted in the inter prediction mode, the motion information of the current block may be predicted in units of blocks, subblocks, or samples based on the correlation between motion information between neighboring blocks and the current block. The motion information may include a motion vector and a reference picture index. The motion information may further include the inter prediction type (L0 prediction, L1 prediction, Bi prediction, etc.) information. When the inter prediction is applied, the neighboring blocks may include spatially neighboring blocks within the current picture and temporally neighboring blocks in the reference picture.

The reference picture including the reference block and the reference picture including the temporal neighboring block may be the same or different. The temporal neighboring block may be called a collocated reference block, a collocated CU (colCU), etc., and the reference picture including the temporal neighboring block may be called a collocated picture (colPic). For example, a motion information candidate list may be constructed based on blocks neighboring the current block, and a flag or index information indicating which candidate is selected (used) to derive the motion vector and/or reference picture index of the current block may be signaled.

The inter prediction may be performed based on various prediction modes. For example, in the case of a skip mode and a merge mode, the motion information of the current block may be the same as motion information of the selected neighboring block. In the case of the skip mode, unlike the merge mode, a residual signal may not be transmitted. In the case of the motion vector prediction (MVP) mode, the motion vector of the selected neighboring block may be used as a motion vector predictor, and a motion vector difference may be signaled. In this case, the motion vector of the current block may be derived using the sum of the motion vector predictor and the motion vector difference.

The motion information may include L0 motion information and/or L1 motion information depending on an inter prediction type (e.g., L0 prediction, L1 prediction, bi-prediction). The motion vector in the L0 direction may be referred to as an L0 motion vector or MVL0, and the motion vector in the L1 direction may be referred to as an L1 motion vector or MVL1. A prediction based on an L0 motion vector may be referred to as L0 prediction, a prediction based on an L1 motion vector may be referred to as L1 prediction, and a prediction based on both the L0 motion vector and the L1 motion vector may be referred to as bi-prediction. Here, the L0 motion vector may represent a motion vector associated with reference picture list L0 (L0), and the L1 motion vector may represent a motion vector associated with reference picture list L1 (L1). The reference picture list L0 may include, as reference pictures, pictures that precede the current picture in output order, and the reference picture list L1 may include pictures that follow the current picture in output order. The preceding pictures may be referred to as forward (reference) pictures, and the subsequent pictures may be referred to as backward (reference) pictures.

The reference picture list L0 may further include, as reference pictures, pictures that follow the current picture in display order. In this case, within the reference picture list L0, the preceding pictures may be indexed first, and the subsequent pictures may be indexed thereafter. The reference picture list L1 may further include, as reference pictures, pictures that precede the current picture in display order. In this case, within the reference picture list L1, the subsequent pictures may be indexed first, and the preceding pictures may be indexed thereafter. Here, the output order may correspond to a picture order count (POC) order.

A video/image encoding procedure based on the inter prediction may schematically include, for example, the following.

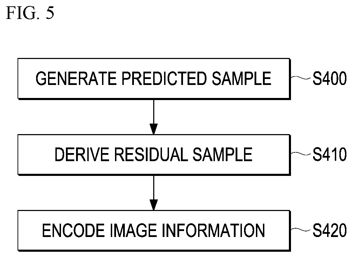

FIG. 5 illustrates an example of an inter-prediction-based video/image encoding method to which an embodiment of the present disclosure may be applied.

The encoding device may perform the inter prediction on the current block to generate predicted samples (S400). The encoding device may derive the inter prediction mode and the motion information of the current block, and generate predicted samples for the current block. Here, the inter prediction mode determination, the motion information derivation, and predicted sample generation procedures may be performed simultaneously, or one procedure may precede the other. For example, the inter prediction unit of the encoding device may include a prediction mode determination unit, a motion information derivation unit, and a predicted sample derivation unit. The prediction mode determination unit may determine the prediction mode for the current block, the motion information derivation unit may derive the motion information of the current block, and the predicted sample derivation unit may derive the predicted samples for the current block.

For example, the inter prediction unit of the encoding device may search for a block similar to the current block within a certain area (search area) of reference pictures through motion estimation, and derive a reference block whose difference from the current block is minimal or less than or equal to a certain reference. Based on this, a reference picture index indicating the reference picture where the reference block is located may be derived, and the motion vector may be derived based on the positional difference between the reference block and the current block. The encoding device may determine a mode applicable to the current block among various prediction modes. The encoding device may compare the RD costs for various prediction modes and determine the optimal prediction mode for the current block.

For example, when the skip mode or the merge mode is applied to the current block, the encoding device may construct a merge candidate list, as will be described below, and derive the reference block, among the reference blocks indicated by the merge candidates included in the merge candidate list, whose difference from the current block is minimal or below a certain threshold. In this case, the merge candidate associated with the derived reference block is selected, and the merge index information indicating the selected merge candidate may be generated and signaled to the decoding device. The motion information of the current block may be derived using motion information of the selected merge candidate.

As another example, when the (A)MVP mode is applied to the current block, the encoding device may construct a list of (A)MVP candidates, which will be described later, and use the motion vector of the motion vector predictor (MVP) candidate selected from among MVP candidates included in the (A)MVP candidate list as the MVP of the current block. In this case, for example, the motion vector indicating the reference block derived by the above-described motion estimation may be used as the motion vector of the current block, and among the MVP candidates, the MVP candidates having the motion vector with the smallest difference from the motion vector of the current block may be the selected MVP candidates. A motion vector difference (MVD), which is the difference obtained by subtracting the MVP from the motion vector of the current block, may be derived. In this case, the information about the MVD may be signaled to the decoding device. Furthermore, when the (A)MVP mode is applied, the reference picture index value may be configured as the reference picture index information and signaled separately to the decoding device.

The encoding device may derive the residual samples based on the predicted samples (S410). The encoding device may derive the residual samples by comparing the predicted samples with the original samples of the current block.

The encoding device may encode image information including prediction information and residual information (S420). The encoding device may output the encoded image information in a bitstream form. The prediction information is information related to the prediction procedure and may include prediction mode information (e.g., a skip flag, a merge flag, or a merge index) and/or motion information. The motion information may include candidate selection information (e.g., a merge index, an MVP flag, or an MVP index) for deriving the motion vector. Furthermore, the motion information may include information about the above-described MVD and/or the reference picture index information. Furthermore, the motion information may include information indicating whether L0 prediction, L1 prediction, or bi-prediction is applied. The residual information is information about the residual samples. The residual information may include information about quantized transform coefficients for the residual samples.

The output bitstream may be stored in a (digital) storage medium and transmitted to the decoding device, or may be transmitted to the decoding device via a network.

Meanwhile, as described above, the encoding device may generate a reconstructed picture (including reconstructed samples and reconstructed blocks) based on the reference samples and the residual samples. This is to derive the same prediction results by the encoding device as those performed by the decoding device, thereby improving coding efficiency. Therefore, the encoding device may store the reconstructed picture (or reconstructed samples, reconstructed blocks) in memory and use the reconstructed picture as a reference picture for inter prediction. As described above, in-loop filtering procedures, etc., may be further applied to the reconstructed picture.

A video/image decoding procedure based on the inter prediction may roughly include, for example, the following:

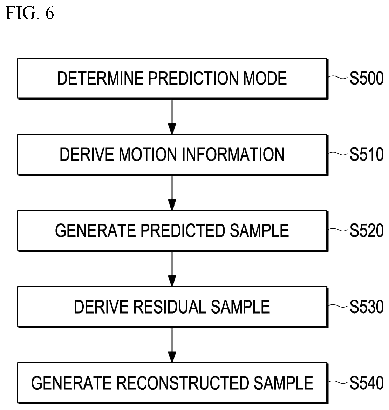

FIG. 6 illustrates an example of an inter-prediction-based video/image decoding method to which an embodiment of the present disclosure may be applied.

Referring to FIG. 6, the decoding device may perform operations corresponding to those performed by the encoding device. The decoding device may perform prediction on the current block and derive the predicted samples based on received prediction information.

Specifically, the decoding device may determine the prediction mode for the current block based on the received prediction information (S500). The decoding device may determine which inter prediction mode is applied to the current block based on the prediction mode information within the prediction information.

For example, the decoding device may determine whether the merge mode or the (A)MVP mode is applied to the current block based on the merge flag. Alternatively, one of various inter prediction mode candidates may be selected based on a mode index. The inter prediction mode candidates may include the skip mode, the merge mode, and/or the (A) MVP mode, or may include various inter prediction modes described below.

The decoding device may derive the motion information of the current block based on the determined inter prediction mode (S510). For example, when the skip mode or the merge mode is applied to the current block, the decoding device may construct the merge candidate list described below and select one merge candidate from among the merge candidates included in the merge candidate list. The selection may be performed based on the above-described selection information (merge index). The motion information of the selected merge candidate may be used to derive the motion information of the current block. The motion information of the selected merge candidate may be used as the motion information of the current block.

As another example, when the (A)MVP mode is applied to the current block, the decoding device may construct an (A)MVP candidate list described below, and use the motion vector of an MVP candidate selected from among the MVP candidates included in the (A)MVP candidate list as the MVP of the current block. The above selection may be performed based on the above-described selection information (MVP flag or MVP index). In this case, the MVD of the current block may be derived based on the MVP information, and the motion vector of the current block may be derived based on the MVP and the MVD of the current block. Furthermore, the reference picture index of the current block may be derived based on the reference picture index information. Within the reference picture list for the current block, the picture indicated by the reference picture index may be derived as the reference picture referenced for the inter prediction for the current block.

Meanwhile, as will be described below, the motion information of the current block may be derived without constructing a candidate list. In this case, the motion information of the current block may be derived according to the procedure described in the prediction mode described below. In this case, the candidate list construction described above may be omitted.

The decoding device may generate the predicted samples for the current block based on the motion information of the current block (S520). In this case, the reference picture is derived based on the reference picture index of the current block, and the predicted samples for the current block may be derived using samples for the reference block to which the motion vector of the current block points on the reference picture. In this case, as will be described below, the predicted sample filtering procedure may be further performed on all or some of the predicted samples for the current block, depending on the case.

For example, the inter prediction unit of the decoding device may include the prediction mode determination unit, the motion information derivation unit, and the predicted sample derivation unit. The prediction mode for the current block may be determined based on the prediction mode information received from the prediction mode determination unit, the motion information (such as the motion vector and/or reference picture index) of the current block may be derived based on the information about the received motion information from the motion information derivation unit, and the predicted samples for the current block may be derived from the predicted sample derivation unit.

The decoding device generates the residual samples for the current block based on the received residual information (S530). The decoding device may generate the reconstructed samples for the current block based on the predicted samples and the residual samples, and generate the reconstructed picture based on the reconstructed samples for the current block (S540). As described above, the in-loop filtering procedure, etc., may be further applied to the reconstructed picture.

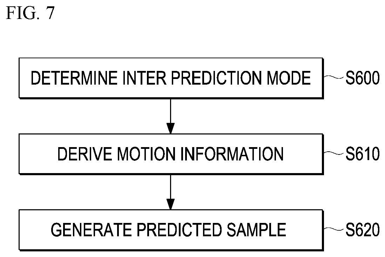

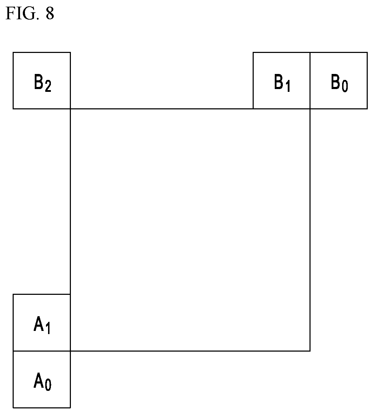

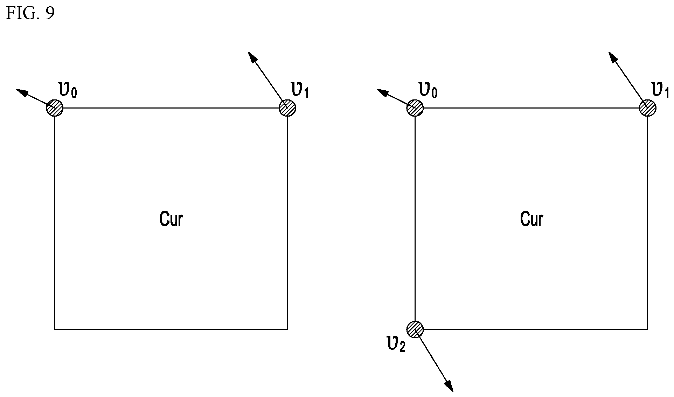

FIG. 7 exemplarily illustrates an inter prediction procedure to which an embodiment of the present disclosure may be applied. FIG. 8 is a diagram illustrating spatial candidates used in the inter prediction procedure to which an embodiment of the present disclosure may be applied. FIG. 9 is a diagram illustrating affine motion prediction used in the inter prediction procedure to which an embodiment of the present disclosure may be applied.

Referring to FIG. 7, as described above, the inter prediction procedure may include an inter prediction mode determination operation, a motion information derivation operation based on the determined prediction mode, and a prediction performance (predicted sample generation) operation based on the derived motion information. The inter prediction procedure may be performed by the encoding device and the decoding device, as described above. In this document, the term "coding device" may include the encoding device and/or the decoding device.

Referring to FIG. 7, the coding device determines an inter prediction mode for the current block (S600). Various inter prediction modes may be used to predict the current block within a picture. For example, various modes may be used, such as the merge mode, the skip mode, the motion vector prediction (MVP) mode, an affine mode, a sub-block merge mode, and a merge with motion vector difference (MMVD) mode. A decoder-side motion vector refinement (DMVR) mode, an adaptive motion vector resolution (AMVR) mode, a bi-prediction with CU-level weight (BCW), a bi-directional optical flow (BDOF), etc., may be used as additional modes, or in place of these modes. Furthermore, according to an embodiment of the present disclosure, the above-described inter prediction mode may include a multi-hypothesis prediction (MHP) mode. The multi-hypothesis prediction mode is a method of performing prediction by weighting predicted blocks generated based on additional motion information for bidirectional prediction (or bi-prediction) blocks. The multi-hypothesis prediction mode will be described in detail below.

In the present disclosure, the affine mode may also be referred to as an affine motion prediction mode. Furthermore, the MVP mode may also be referred to as an advanced motion vector prediction (AMVP) mode. In the present disclosure, motion information candidates derived from some modes and/or some modes may be included as motion information-related candidates for other modes. For example, an HMVP candidate may be added as a merge candidate for the merge/skip mode, or as the MVP candidates for the AMVP mode. When the HMVP candidate is used as a motion information candidate for the merge mode or the skip mode, the HMVP candidate may be referred to as an HMVP merge candidate.

The prediction mode information indicating the inter prediction mode for the current block may be signaled from the encoding device to the decoding device. The prediction mode information may be included in the bitstream and received by the decoding device. The prediction mode information may include index information indicating one of multi-candidate modes. Alternatively, the inter prediction mode may be indicated through hierarchical signaling of flag information.

In this case, the prediction mode information may include one or more flags. For example, the skip flag may be signaled to indicate whether the skip mode is applied. When the skip mode is not applied, the merge flag may be signaled to indicate whether the merge mode is applied. When the merge mode is not applied, the MVP mode may be applied. Alternatively, additional flags may be signaled for additional distinction. The affine mode may be signaled as an independent mode, or as a mode dependent on the merge mode or MVP mode. For example, the affine mode may include an affine merge mode and an affine MVP mode.

The coding device may derive motion information for the current block (S610). The motion information may be derived based on the inter prediction mode. The coding device may perform the inter prediction using the motion information of the current block. The encoding device may derive optimal motion information for the current block through a motion estimation procedure.

For example, the encoding device may use the original block within the original picture for the current block to search for similar reference blocks with high correlation within a predetermined search range within the reference picture, in fractional pixel units, thereby deriving motion information. The block similarity may be derived based on a difference in phase-based sample values. For example, the block similarity may be calculated based on the SAD between the current block (or a template of the current block) and the reference block (or a template of the reference block). In this case, the motion information may be derived based on the reference block with the smallest SAD within the search range. The derived motion information may be signaled to the decoding device using various methods based on the inter prediction mode.

The coding device may perform the inter prediction based on the motion information for the current block (S620). The encoding device may generate the predicted sample(s) for the current block based on the motion information. The current block including the predicted samples may be referred to as a predicted block.

When the merge mode is applied, the motion information of the current predicted block is not directly transmitted, but rather the motion information of the current predicted block is derived using the motion information of the neighboring predicted blocks. Therefore, the motion information of the current predicted block may be indicated by transmitting flag information indicating that the merge mode is used and a merge index indicating which neighboring predicted block is used. The merge mode may be referred to as a regular merge mode.

To perform the merge mode, the encoder searches for merge candidate blocks used to derive the motion information of the current predicted block. For example, up to five merge candidate blocks may be used, but the number of merge candidate blocks is not limited thereto. The maximum number of merge candidate blocks may be transmitted in a slice header or a tile group header, but is not limited thereto. After finding the merge candidate blocks, the encoder may generate the merge candidate list and select the merge candidate block with the lowest cost as the final merge candidate block.

For example, the merge candidate list above may utilize five merge candidate blocks. For example, four spatial merge candidates and one temporal merge candidate may be utilized. Specifically, in the case of the spatial merge candidates, the blocks illustrated in FIG. 8 may be utilized as the spatial merge candidates. Hereinafter, the spatial merge candidates, or the spatial motion vector prediction (MVP) candidates described below, may be referred to as spatial motion vector prediction (SMVP), and the temporal merge candidates, or the temporal motion vector prediction (MVP) candidates described below, may be referred to as temporal motion vector prediction (TMVP).

The motion vector prediction (MVP) mode may be referred to as advanced motion vector prediction (AMVP) mode. When the MVP mode is applied, the MVP candidate list may be generated using the motion vectors of the reconstructed spatial neighboring blocks (e.g., the neighboring blocks of FIG. 8) and/or the motion vectors corresponding to the temporal neighboring blocks (or Col blocks). In other words, the motion vectors of the reconstructed spatial neighboring blocks and/or the motion vectors corresponding to the temporal neighboring blocks may be used as the MVP candidates. When the pair prediction is applied, an MVP candidate list for deriving L0 motion information and an MVP candidate list for deriving L1 motion information may be generated and used separately.

The above-described prediction information (or prediction-related information) may include selection information (e.g., an MVP flag or an MVP index) indicating an optimal MVP candidate selected from among the MVP candidates included in the list. The prediction unit may use the selection information to select the MVP for the current block from among the MVP candidates included in the motion vector candidate list.

The prediction unit of the encoding device may obtain the MVD between the motion vector of the current block and the MVP, encode the MVD, and output the encoded MVD in the bitstream form. Specifically, the MVD may be obtained by subtracting the MVP from the motion vector of the current block.

In this case, the prediction unit of the decoding device may obtain the MVD included in the prediction-related information and derive the motion vector of the current block by adding the MVD to the MVP. The prediction unit of the decoding device may obtain or derive the reference picture index, etc., indicating the reference picture from the prediction-related information.

The existing video coding systems use only a single motion vector (i.e., a translation motion model) to represent the motion of a coded block. However, although the translation motion model may represent the optimal motion at the block level, it does not necessarily correspond to the optimal motion for each pixel. Determining the optimal motion vector at the pixel level may improve encoding efficiency.

To this end, the affine motion prediction, which uses an affine motion model for encoding, is applied in affine mode. Affine motion prediction may represent the motion vector at each pixel level of a block using two, three, or four motion vectors.

As illustrated in FIG. 9, the affine motion prediction may determine the motion vector at the pixel location within a block using two or more control point motion vectors (CPMVs). The set of motion vectors is referred to as an affine motion vector field (MVF).

A combination of the inter prediction and the intra prediction may be applied to the current block. An additional flag (e.g., ciip_flag) may be signaled to indicate whether a combined inter/intra prediction (CIIP) mode is applied to the current coding unit. For example, when the coding unit is coded in the merge mode, and the coding unit includes 64 or more luma samples (i.e., the coding unit width times the coding unit height is greater than or equal to 64), and both the coding unit width and the coding unit height are less than 128 luma samples, an additional flag is signaled to indicate whether the CIIP mode is applied to the current coding unit. CIIP prediction combines the inter prediction signal and the intra prediction signal. An inter prediction signal P_inter of the CIIP mode is derived using the same inter prediction process applied to the regular merge mode, and the intra prediction signal P_intra is derived together with a planar mode according to the regular intra prediction process. Thereafter, the intra and inter prediction signals are combined using a weighted average, and the weights are calculated based on the coding modes of the top and left neighboring blocks as follows:

When the top neighbor is available and intra-coded, isIntraTop is set to 1; otherwise, isIntraTop is set to 0;

When the left neighbor is available and intra-coded, isIntraLeft is set to 1; otherwise, isIntraLeft is set to 0;

When (isIntraLeft + isIntraLeft) is 2, wt is set to 3;
Otherwise, when (isIntraLeft + isIntraLeft) is 1, wt is set to 2;
Otherwise, wt is set to 1.

The CIIP prediction is constructed as shown in Equation 4:

[Equation 4]

$$P_{\text{CIIP}} = \left( (4 - wt) * P_{inter} + wt * P_{intra} + 2 \right) \gg 2$$

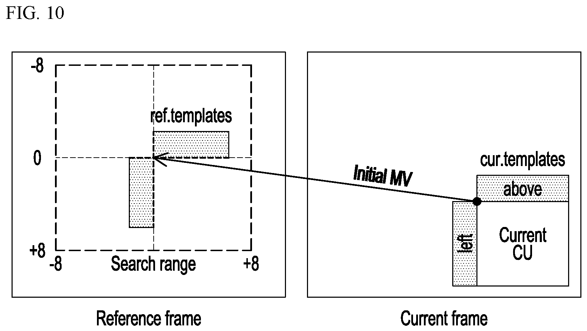

FIG. 10 is a diagram illustrating template matching (TM) to which an embodiment of the present disclosure may be applied.

The TM is a decoder-side motion vector derivation method that refines motion information of the current coding unit by finding the closest match between a template (i.e., the upper and/or left adjacent block of the current coding unit) in the current image and a block (i.e., of the same size as the template) in a reference image. As illustrated in FIG. 10, within a [-8, +8]-pel search range, a better motion vector is searched around the initial motion of the current coding unit. The search step size is determined by the AMVR mode, and the TM may be cascaded with a bidirectional matching process in the merge mode.

In the AMVP mode, the MVP candidate is determined based on the TM error. The template that achieves the minimum difference between the current block template and the reference block template is selected. The TM is then performed only on the specific MVP candidate to refine the motion vector. The TM uses an iterative diamond search within the [-8, +8]-pel search range, starting with full-pel MVD precision (4-pel in 4-pel AMVR mode), to refine the specific MVP candidate.

Depending on the AMVR mode, a cross-search is performed with the full-pel MVD precision (4-pel in 4-pel AMVR mode), followed by sequential half-pel and quarter-pel searches to further refine the AMVP candidate. The search process ensures that the MVP candidate retains the same MVD precision as indicated in the AMVR mode after the TM process. The search process terminates when the difference between the previous minimum cost and the current minimum cost in the iteration is less than a threshold equal to the area of the block.

[Table 1]

| Search pattern | AMVR mode | | | | Merge mode | |
|---|---|---|---|---|---|---|
| | 4-pel | Full-pel | Half-pel | Quarter-pel | AltIF=0 | AltIF=1 |
| **4-pel diamond** | v | | | | | |
| **4-pel cross** | v | | | | | |
| **Full-pel diamond** | | v | v | v | v | v |
| **Full-pel cross** | | v | v | v | v | v |
| **Half-pel cross** | | | v | v | v | v |
| **Quarter-pel cross** | | | | v | v | |
| **1/8-pel cross** | | | | | v | |

In the merge mode, a similar search method is applied to merge candidates indicated by the merge index. As shown in Table 1, the TM may be performed up to 1/8-pixel MVD precision, or may skip over half-pixel MVD precision, depending on the use of an alternative interpolation filter (used when AMVR is in half-pixel mode) based on the merged motion information. Furthermore, when the TM mode is enabled, the TM may operate as an independent process or as an additional motion enhancement process between block-based and sub-block-based bidirectional matching (BM) schemes, depending on whether the BM is enabled or disabled.

In the multi-hypothesis inter prediction (MHP) mode, one or more additional motion-compensated prediction signals are signaled in addition to the existing bi-prediction signal. Consequently, the overall prediction signal is obtained through sample-by-sample weighted superposition. Using the bidirectional prediction signal p_bi and the first additional prediction signal h_3, the resulting prediction signal p_3 is obtained as shown in Equation 5:

[Equation 5]

$$p_3 = (1 - \alpha)p_{bi} + \alpha h_3$$

The weight $\alpha$ may be specified with a new syntax element add_hyp_weight_idx according to the mapping in Table 2:

[Table 2]

| add_hyp_weight_idx | $\alpha$ |
|---|---|
| 0 | 1/4 |
| 1 | -1/8 |

As shown in Equation 6, one or more additional prediction signals may be used. The resulting overall prediction signal is iteratively accumulated for each additional prediction signal.

[Equation 6]

$$p_{n+1} = (1 - \alpha_{n+1})p_n + \alpha_{n+1}h_{n+1}$$

As a result, the overall prediction signal is obtained as the last p_n (i.e., the p_n with the largest index n). For example, up to two additional prediction signals may be used (e.g., n is limited to 2).

The motion parameters of each additional prediction hypothesis may be explicitly signaled by specifying the reference index, the motion vector prediction index, and the MVD, or implicitly signaled by specifying the merge index. A separate multi-hypothesis merging flag may distinguish these two signaling modes.

In the inter AMVP mode, the MHP may be applied only when Bi-prediction with CU-level weight (BCW) weights are unequal in dual prediction mode.

Also, a combination of the MHP and the BDOF is possible, but the BDOF may only be applied to the bidirectional prediction portion of the prediction signal (i.e., the first two hypotheses).

The predicted block for the current block may be derived based on the motion information derived according to the inter prediction mode. The predicted block may include the predicted samples (predicted sample array) of the current block. When the motion vector of the current block points to fractional-sample units, the interpolation procedure may be performed, through which the predicted samples for the current block may be derived based on fractional-sample reference samples within the reference picture.

When the affine inter prediction is applied to the current block, the predicted samples may be generated based on the sample/subblock-level motion vector (MV).

When the bi-prediction is applied, the predicted samples derived based on the L0 prediction (that is, prediction using a reference picture in a reference picture list L0 and MVL0) and the predicted samples derived based on the L1 prediction (that is, prediction using a reference picture in a reference picture list L1 and MVL1) may be combined through a (phase-dependent) weighted sum or weighted average (bi-prediction with CU-level weight, BCW), and the resulting predicted samples may be used as the predicted samples of the current block.. When the bi-prediction is applied and the reference picture used for the L0 prediction and the reference picture used for the L1 prediction are located in different temporal directions with respect to the current picture, this may be referred to as the bi-directional prediction.

The reconstructed samples and the reconstructed pictures may be generated based on the derived predicted samples, and then the procedures such as in-loop filtering may be performed.

The following describes the MHP mode in detail. As described above, the MHP mode is a prediction method that utilizes an additional predicted block (or predictor) in addition to the basic predicted block. The MHP mode may be selectively used as one of the various inter prediction modes described above. It should be understood that the MHP mode according to the embodiments of the present disclosure is not limited to these names. In the present specification, the MHP mode may also be referred to as a multi-reference mode, multi-reference prediction, a multi-reference prediction mode, a multi-reference block mode, the MHP mode, a multi-hypothesis inter prediction mode, an inter-inter combined prediction mode, a combined inter prediction mode, a combined prediction mode, a multi-inter prediction mode, a multi-prediction mode, an additional reference prediction mode, an additional reference mode, a multi-reference block, etc.

## Embodiment

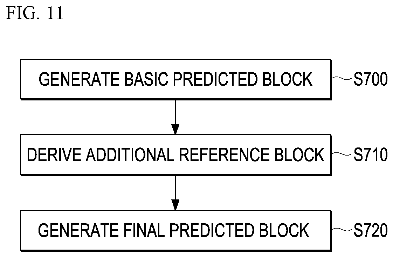

FIG. 11 illustrates a prediction method performed by the decoding device according to an embodiment of the present disclosure. The steps or operations illustrated in FIG. 11 are not essential components of the prediction method, and at least some of the steps or operations illustrated in FIG. 11 may be omitted.

Referring to FIG. 11, the decoding device may generate a basic predicted block (or reference block) by performing unidirectional or bidirectional prediction (S700). When a multi-reference mode is applied, the decoding device may generate and combine additional reference blocks in addition to the basic reference block generated (or derived) by unidirectional or bidirectional prediction. For example, a basic reference block may be a block referenced (or used) to generate (or derive) the basic predicted block. For example, the basic reference block may include an L0 reference block and/or an L1 reference block. For example, the existing predicted block may be a block generated (or derived) by combining or weighting-sum basic reference blocks. For example, the basic predicted block may refer to a block obtained by weighted-summing L0 and L1 predicted blocks. In the present disclosure, the basic predicted block may be referred to as a basic block, an initial predicted block, an initial block, a temporary predicted block, a temporary block, a regular predicted block, a regular block, etc. In the present embodiment, the basic predicted block is described primarily as a block obtained by weighted-summing the L0 and L1 predicted blocks, but the present disclosure is not limited thereto.

In other words, in an embodiment, an image decoding device according to the present disclosure may derive a first reference block and a second reference block of the current block by performing bidirectional prediction, and generate the basic predicted block by weighted-summing the first and second reference blocks. Alternatively, in an embodiment, the image decoding device according to the present disclosure may generate the basic predicted block by deriving a third reference block of the current block by performing the unidirectional prediction. In other words, the basic predicted block may be derived by weighted-summing the multi-reference blocks or may be derived using a single reference block.

A decoding device may derive (or generate) additional reference blocks (or additional predicted blocks) based on the multi-reference mode (S710). The decoding device may derive additional reference blocks in addition to the basic predicted block and combine (or weighted-sum) the derived additional reference blocks with the basic predicted block.

In an embodiment, when the multi-reference mode is applied, the decoding apparatus may derive and combine additional reference blocks up to a predefined number. In other words, the decoding device may combine (or weighted-sum) additional reference blocks less than or equal to the predefined number with the basic predicted block. For example, the predefined number may be 2. Alternatively, the predefined number may be one of 1, 2, 3, or 4. The predefined number may be referred to as the maximum number in the multi-reference mode.

Furthermore, when additional multi-reference blocks are combined, the additional multi-reference blocks may be sequentially weighted-summed with the basic predicted block. For example, when up to two additional reference blocks are generated, the basic predicted block and the first additional reference block may be weighted-summed to generate a predicted block, and the generated predicted block and the second additional reference block may be weighted-summed to generate a final predicted block. The predicted block generated by weighted-summing the basic predicted block and the first additional reference block may be referred to as an intermediate predicted block.

Alternatively, when the additional multi-reference blocks are combined, the basic predicted block and the generated additional multi-reference blocks may be weighted-summed together. That is, after the additional multi-reference blocks are generated, weights may be applied to each of the additional multi-reference blocks and the basic predicted block (or the L0 reference block and the L1 reference block) and then weighted-summed together.

Furthermore, in an embodiment, the decoding device may determine whether to apply the multi-reference mode. In this case, an operation of determining whether to apply the multi-reference mode may be added prior to operation S710. For example, whether the multi-reference mode is applied may be explicitly signaled or implicitly derived (or determined) by the decoding device.

Furthermore, as an embodiment, whether the multi-reference mode is applied may be signaled from the encoding device to the decoding device. For example, a multi-reference mode flag indicating whether the multi-reference mode is applied may be signaled from the encoding device to the decoding device. In this case, conditions for signaling/parsing the multi-reference mode flag may be predefined. The signaling/parsing condition of the multi-reference mode flag may be an availability condition for the multi-reference mode. When the signaling/parsing condition is satisfied, the decoding device may parse the multi-reference mode flag from the bitstream. Alternatively, as an embodiment, whether the multi-reference mode is applied may be derived by the decoding device based on the predefined encoding information. As an example, whether or not the multi-reference mode is applicable may be defined in the same way as the availability conditions (or signaling/parsing conditions) of the multi-reference mode described below.

Additionally, as an embodiment, the decoding device may obtain multi-reference mode information (also referred to as multi-reference mode prediction information) to generate an additional reference block. For example, the multi-reference mode information may include weight information and/or prediction information. Based on the prediction information, the reference block according to the multi-reference mode, i.e., the additional reference block, may be derived, and the additional reference block derived based on the weight information may be weighted-summed with the basic predicted block (or intermediate predicted block). Furthermore, as an example, the multi-reference mode information may further include the multi-reference mode flag indicating whether the multi-reference mode is applied.

For example, the prediction information may include mode information used to derive the additional reference block and motion information according to the mode. The mode information may be INTER mode information indicating whether the mode is the merge mode or the AMVP (or INTER) mode. For example, the mode information may be the merge flag. That is, the merge mode or the AMVP (or INTER) mode may be used to derive additional reference blocks, and a flag syntax element indicating whether the merge mode or the AMVP (INTER) mode is used may be signaled. Alternatively, a predefined mode among the merge mode or the AMVP (or INTER) mode may be used to derive additional reference blocks. Alternatively, the merge mode or the AMVP (or INTER) mode may be selected based on predefined encoding information.

For example, when the merge mode is used to derive additional reference blocks, the prediction information may include the merge index. The merge index may specify the merge candidate within the merge candidate list. When AMVP (or INTER) mode is used to derive additional reference blocks, the prediction information may include the MVP flag, a reference index, and MVD information. The MVP flag may specify a candidate within the MVP candidate list.

The decoding device may generate the final predicted block by weighted-summing the basic predicted block and the additional reference block (S720). As described above, the number of additional reference blocks may be less than or equal to a predefined number. For example, when the number of additional reference blocks is 2, the final predicted block may be a weighted sum of the basic predicted block and the two additional reference blocks. In an embodiment, the weight information for the weighted sum may be signaled or derived.

As described above, when the additional multi-reference blocks are combined, the additional multi-reference blocks may be sequentially weighted-summed with the basic predicted block, or the basic predicted block and the generated additional multi-reference blocks may be weighted-summed together.

Generally, the inter prediction process supports unidirectional or bidirectional prediction. However, when the inter prediction process includes more than one predicted block, the inter prediction process may be considered MHP (or multi-reference prediction). In other words, the multi-reference prediction utilizes the multi-reference blocks (or predicted blocks) for prediction, and the following signaling or derivation methods may be considered.

In an embodiment, information about the additional reference block may be signaled using the merge index, identical to or similar to the merge mode. Alternatively, information about the additional reference block may be signaled using a reference index, the MVP flag (or index), the MVD, or the like, identical to or similar to the AMVP (or INTER) mode. Alternatively, the motion information may be derived by inheriting information about the additional reference block from a neighboring block that has already been decoded. In an embodiment, whether or not information about the additional reference block is signaled may be determined depending on the number of additional reference blocks used. For example, when there is one additional reference block, information about the additional reference block may be signaled, and when there are two additional reference blocks, all or some information about the additional reference blocks may not be signaled but may be derived on the decoder side.

According to the multi-reference mode according to an embodiment of the present disclosure, by signaling/deriving the weight information as well as the motion information of the predicted block, a block with different characteristics from the conventional predicted block may be generated, and the prediction accuracy may be improved by utilizing various reference blocks for prediction.

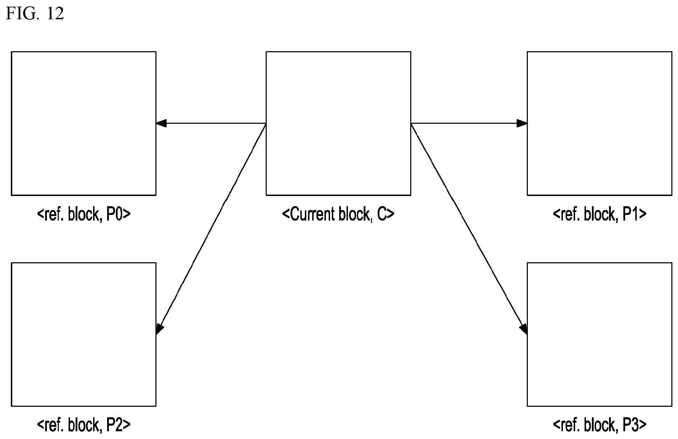

FIG. 12 is a diagram illustrating reference blocks used in the multi-reference mode according to an embodiment of the present disclosure.

Referring to FIG. 12, the diagram illustrates a case where the multi-reference blocks (predicted blocks) are used for prediction when the multi-reference mode is applied. That is, in FIG. 12, reference blocks P0 and P1 represent basic reference blocks (or regular reference blocks), and reference blocks P2 and P3 represent additional reference blocks.

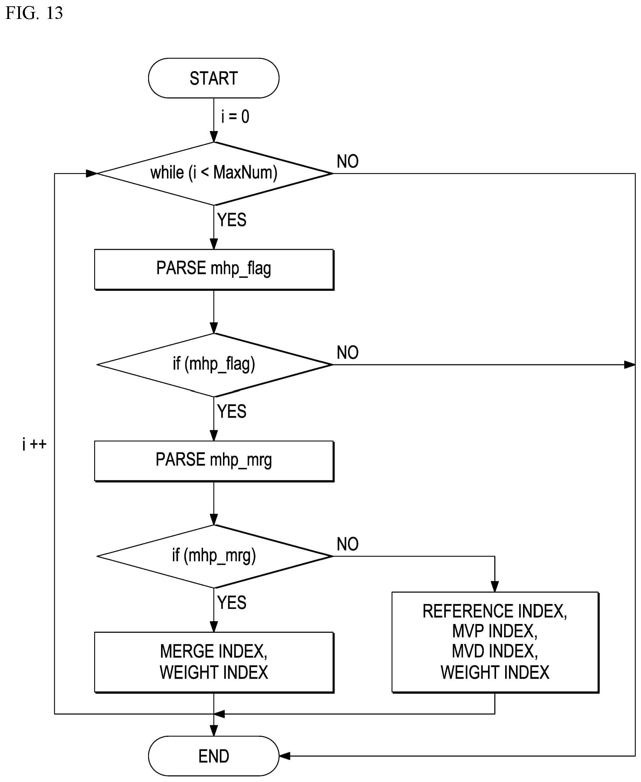

FIG. 13 is a diagram illustrating a method of signaling information about additional reference blocks used in the multi-reference mode according to an embodiment of the present disclosure. The operations illustrated in FIG. 13 are not essential operations of the embodiment of the present disclosure, and at least some of the operations illustrated in FIG. 13 may be omitted.

When additional reference blocks may exist and information for each additional reference block is signaled and parsed, the motion information of the added predicted block may be signaled and parsed in the order illustrated in FIG. 13. Here, MaxNum may indicate the maximum number of additional reference blocks.

Referring to FIG. 13, a loop may be performed until the number of additional reference blocks reaches the maximum number. When the number of additional reference blocks is less than or equal to the maximum number, mhp_flag may be parsed (signaled). The mhp_flag represents a syntax element indicating whether additional reference blocks are used. When the additional reference blocks are used, mhp_mrg may be parsed. mhp_mrg represents a syntax element indicating whether the merge mode or the AMVP (or INTER) mode is used to derive the additional reference blocks. Depending on the value of mhp_mrg, when the merge mode is applied, the merge index and the weight index may be signaled, and when the AMVP (or INTER) mode is applied, the reference index, the MVP index, the MVD data, and the weight index may be signaled.

As illustrated in FIG. 13, when the maximum number of additional reference blocks that may be generated is MaxNum, the presence of MHP-related syntax may be determined through mhp_flag. For example, when MaxNum is 2, the mhp_flag may have values shown in Table 3 below, and the presence of the first and second additional blocks may be determined based on these values.

[Table 3]

| Mhp_flag | 1st additional block | 2nd additional block |
|---|---|---|
| '0' | X (absence) | X (absence) |
| '1,' '0' | O (presence or existence) | X (absence) |
| '1,' '1' | O (presence or existence) | O (presence or existence) |

Referring to Table 3, when mhp_flag is '1,' the additional reference block may be present. Additional reference blocks may be identified as MHP_MERGE mode or MHP_AMVP (or MHP_INTER) mode through the mhp_mrg. In the MHP_MERGE mode, the merge index and the weight index may be signaled. In the MHP_AMVP (or MHP_INTER) mode, the reference index, the MVP index (or flag), the MVD data, and the weight index may be signaled.

The syntax names described in the present disclosure are examples, and the names may vary. Furthermore, in the present disclosure, the modes for additional reference blocks when additional reference blocks exist are described as MHP_MERGE and MHP_AMVP (or MHP_INTER), which may be distinguished from the merge mode and the AMVP (or INTER) mode, which represent motion information of regular reference blocks. In particular, the MVP candidate list for regular reference blocks and the MVP candidate list for additional reference blocks may be independently constructed. Furthermore, the MHP_MERGE and MHP_AMVP (or MHP_INTER) modes for additional reference blocks may include weight index information.

Furthermore, in an embodiment, in addition to the method of applying the multi-reference blocks through the above-described signaling, the multi-reference blocks may be applied through a derivation method. In particular, since the merge mode uses motion information inherited from decoded adjacent/non-adjacent blocks, information for the multi-reference blocks may also use motion information inherited from adjacent/non-adjacent blocks. For example, when the current block is in the merge mode and the adjacent/non-adjacent blocks used to obtain motion information include MHP information, this information may be inherited and used to generate additional reference blocks for the current block.

In an embodiment, as described above, the multi-reference block information may be acquired through the signaling or a derivation process, and both methods may be applied. For example, when configuring N multi-reference blocks, when there are M multi-reference blocks acquired through the derivation process (M<=N), information for N-M multi-reference blocks may be acquired through signaling.

The additional reference blocks acquired through signaling or derivation may be weighted-summed to generate the final predicted block as follows: As an example, when the multi-reference blocks are applied, the final predicted block may be calculated as in the following Equation 7. Equation 7 assumes that there are P0 and P1 as regular reference blocks, and additionally, P2 and P3.

[Equation 7]

$$\text{Step 1: } P' = (P0 + P1) / 2$$

$$\text{Step 2: } P'' = w0 * P2 + (1-w0) * P'$$

$$\text{Step 3: } P = w1 * P3 + (1-w1) * P''$$

In Equation 7, WO and W1 represent weights applied to additional reference blocks P2 and P3, respectively. In the first operation of Equation 7, the basic predicted block may be generated through a weighted sum of regular reference blocks. In the second and third operations of Equation 7, weighted summing of additional reference blocks may be performed. As described above, the basic predicted block may be a regular reference block prior to weighted-summing or the weighted-summed predicted block.

While the multi-reference blocks are described as being added to the INTER prediction process, this is not limited to the INTER prediction process. The multi-reference blocks may be included in the INTRA prediction process and the IBC process. In other words, the prediction mode for the basic predicted block is not limited to the INTER mode; it may also be an INTRA mode or an IBC mode.

When the additional reference block is included in various basic modes (prediction modes for a basic block), the basic block (regular block) may include an INTER block (INTER predicted block), an INTRA block (TNTRA predicted block), and an IBC block, and the prediction mode (hereinafter referred to as "additional prediction mode") of the additional reference block may include not only the MHP_AMVP (or MHP_INTER) mode or the MHP_MERGE mode, but also an MHP_INTRA mode and an MHP_IBC mode. In other words, the prediction mode (additional prediction mode) of the additional reference block is not limited to the INTER mode, and the INTRA mode or the IBC mode may also be possible. In an embodiment, the additional prediction mode may be the INTER mode (MHP_INTER mode), the INTRA mode (MHP_INTRA mode), or the IBC mode (MHP_IBC mode).

In an embodiment, information (e.g., a flag or an index) indicating each additional prediction mode may be signaled to determine the prediction mode for the additional reference block. Additionally, information indicating each additional prediction mode may be acquired at the decoder level through inheritance other than signaling. Furthermore, the prediction mode for the multi-reference blocks may be derived and generated at the decoder level when certain conditions are met, in addition to signaling or transmission methods.

## Embodiment 1

The prediction mode (additional prediction mode) of the additional reference block may include the MHP_INTRA mode, the MHP_IBC mode, or the MHP_INTER mode. The prediction mode for the additional reference block, i.e., the additional prediction mode, may exist in various combinations when the prediction mode for the basic predicted block, i.e.,

the basic prediction mode (or basic mode), is the INTRA mode, the IBC mode, or the INTER mode.

In an embodiment, the prediction modes for the additional reference block, including the MHP_INTRA mode, the MHP_IBC mode, and the MHP_INTER mode, may exist in a limited number depending on the type of the basic mode, and may be determined based on combinations with the allowed basic mode.

In an embodiment, the condition for combining the prediction mode for the basic predicted block (basic prediction mode, MHP mode) with the prediction mode for the additional reference block (additional prediction mode) may be the prediction mode for the basic predicted block.

The condition for combining the basic mode and the additional prediction mode may be a prediction tool applied to the basic block in the basic INTER mode. The prediction tool of the basic INTER mode may include tools related to the method of generating the predicted block, such as the basic affine mode (e.g., affine AMVP and affine merge), the basic AMVP mode, the basic merge mode, the MMVD mode, the CIIP mode, and the GPM mode.

The condition for combining the basic mode and the additional prediction mode may be a mode applied to the basic block in the basic INTRA mode (e.g., planar mode, DC mode, directional mode, etc.). In other words, whether the MHP_INTRA is allowed may be determined based on the mode for the basic INTRA mode. For example, the MHP_INTRA mode may be allowed when the basic INTRA mode is planar or DC. Furthermore, the allowed modes in the MHP_INTRA mode may be determined based on the basic INTRA mode.

The condition for combining the basic mode and the additional prediction mode may be the number of predicted blocks (or basic reference blocks) used in the basic block. The allowed MHP mode may be determined based on whether the basic INTER mode uses unidirectional or bidirectional prediction, or whether the basic INTRA mode uses modes such as decoder-side intra-mode derivation (DIMD) or template-based intra-mode derivation (TIMD), which use the multi-reference blocks.

The condition for combining the basic mode and the additional prediction mode may be the size of the current block, the width/height of the current block, or the block ratio. In an embodiment, when the width or height of the current block is equal to a reference value, a combination between any one of the basic INTER mode, the basic INTRA mode, or the basic IBC mode and at least one of the MHP_INTER mode, the MHP_INTRA mode, or the MHP_IBC mode is allowed, or when the width or height of the current block is greater than the reference value, a combination between any one of the basic INTER mode, the basic INTRA mode, or the basic IBC mode and at least one of the MHP_INTER mode, the MHP_INTRA mode, or the MHP_IBC mode is allowed, or when the width or height of the current block is less than the reference value, a combination between any one of the basic INTER mode, the basic INTRA mode, or the basic IBC mode and at least one of the MHP_INTER mode, the MHP_INTRA mode, or the MHP_IBC mode is allowed.

The condition for the combination between the basic mode and the additional prediction mode may be a quantization parameter (QP). In an embodiment, when the QP is equal to a threshold (e.g., 32), a combination between any one of the basic INTER mode, the basic INTRA mode, or the basic IBC mode and at least one of the MHP_INTER mode, the MHP_INTRA mode, or the MHP_IBC mode is allowed, or when the QP is greater than the threshold, a combination between any one of the basic INTER mode, the basic INTRA mode, or the basic IBC mode and at least one of the MHP_INTER mode, the MHP_INTRA mode, or the MHP_IBC mode is allowed, or when the QP is less than the threshold, a combination between any one of the basic INTER mode, the basic INTRA mode, or the basic IBC mode and at least one of the MHP_INTER mode, the MHP_INTRA mode, or the MHP_IBC mode is allowed.

The specific condition for the combination between the basic mode and the additional prediction mode may be a temporal layer. For example, when the temporal layer is equal to a threshold (e.g., 4), a combination between any one of the basic INTER mode, the basic INTRA mode, or the basic IBC mode and at least one of the MHP_INTER mode, the MHP_INTRA mode, or the MHP_IBC mode is allowed, or when the temporal layer is greater than the threshold, a combination between any one of the basic INTER mode, the basic INTRA mode, or the basic IBC mode and at least one of the MHP_INTER mode, the MHP_INTRA mode, or the MHP_IBC mode is allowed, or when the temporal layer is less than the threshold, a combination between any one of the basic INTER mode, the basic INTRA mode, or the basic IBC mode and at least one of the MHP_INTER mode, the MHP_INTRA mode, or the MHP_IBC mode is allowed.

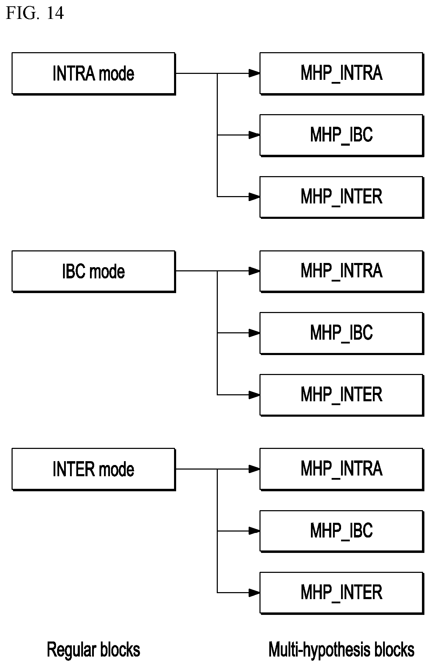

FIG. 14 is a diagram illustrating a combination between a basic block mode and a mode for the additional reference block according to an embodiment of the present disclosure.

In an embodiment, when additional reference blocks exist, the INTRA mode and the IBC mode may be supported in addition to the INTER mode (AMVP mode, MERGE mode). When the INTRA mode, which is the additional reference block other than the basic block, is referred to as the MHP_INTRA mode, the IBC mode as the MHP_IBC mode, and the INTER mode as the MHP_INTER mode, the combination of the basic block and the additional reference block in each of the INTER mode, the INTRA mode, and the IBC mode may be as illustrated in FIG. 14.

As illustrated in FIG. 14, the MHP_INTRA mode, the MHP_IBC mode, and the MHP_INTER mode may exist for each of the INTER mode, the INTRA mode, and the IBC mode. This is an example, and the modes for the additional reference blocks allowed for each prediction mode may be as follows:
The additional reference blocks in the MHP_INTRA mode may be allowed.

A-1 The limited number of additional reference blocks in the MHP_INTRA mode may be included. For example, the additional reference block in the MHP_INTRA mode may be allowed.

A-2 The additional reference block in the MHP_INTRA mode may be allowed when certain conditions are met.

The additional reference block in the MHP-IBC mode may be allowed.

B-1 The limited number of additional reference blocks in the MHP-IBC mode may be included. For example, the additional reference block in the MHP_IBC mode may be allowed.

B-2 The MHP_IBC mode may be allowed when certain conditions are met.

B-3 Since the IBC mode is divided into the AMVP mode and the MERGE mode, the MHP_IBC may also be divided into an MHP_IBC_AMVP mode and an MHP_IBC_MERGE mode. Alternatively, both the MHP_IBC_AMVP mode and the MHP_IBC_MERGE mode may be allowed, or only a specific mode between the MHP_IBC_AMVP mode and the MHP_IBC_MERGE mode may be allowed. For example, only the MHP_IBC_MERGE mode may be allowed.

C The additional reference blocks in the MHP_INTER mode may be allowed.

C-1 The limited number of additional reference blocks in the MHP_INTER mode may be included. For example, one MHP_INTER mode may be allowed.

C-2 The additional reference blocks in the MHP_INTRA mode may be allowed when certain conditions are met.

C-3 Since the basic INTER mode is divided into the AMVP and MERGE modes, the MHP_INTER mode for the additional reference block may also have both the MHP_AMVP and MHP_MERGE modes. Alternatively, both the MHP_AMVP and MHP_MERGE modes for the additional reference block may be allowed, or only one of the MHP_AMVP and MHP_MERGE modes for the additional reference block may be allowed. For example, only the MHP_MERGE mode may be allowed.

Various combinations of modes may be generated using the method described above. In an embodiment, when the basic block mode is the INTRA mode, a combination of one additional reference block of the MHP_INTRA mode and one additional reference block of the MHP_IBC mode may be allowed. In an embodiment, when the basic block mode is the IBC mode, a combination of one additional reference block of the MHP_INTER mode and additional multi-reference blocks of the MHP_IBC mode may be allowed.

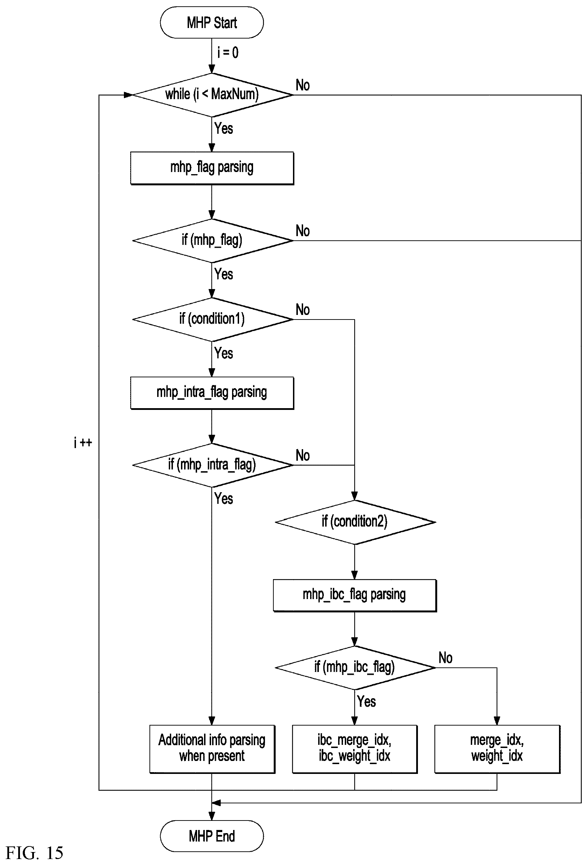

FIG. 15 is a diagram illustrating a method of signaling information about an additional reference block used in the multi-reference mode according to an embodiment of the present disclosure. The operations illustrated in FIG. 15 are not essential operations of an embodiment of the present disclosure, and at least some of the operations illustrated in FIG. 15 may be omitted.

Specifically, FIG. 15 illustrates an example in which the MHP_INTRA mode, the MHP_IBC mode, and the MHP_INTER mode for the additional reference block are allowed in a specific mode for a basic block. In an embodiment, when the additional reference block exists and satisfies a specific condition, information (e.g., a flag or index) indicating whether the MHP_INTER mode is allowed may be signaled (encoder)/parsed (decoder). For example, a flag mhp_intra_flag indicating whether the MHP_INTRA mode is allowed may be signaled/parsed. The name of the flag mhp_intra_flag is not limited thereto, and flags with various names may be used to indicate whether the MHP_INTRA mode is allowed. For example, when the flag mhp_intra_flag is '1,' the additional reference block is classified as the MHP_INTRA mode, and prediction information for the INTRA block as the additional reference block, when present, may be signaled/parsed.

When a specific condition is not satisfied or the flag mhp_intra_flag is '0,' information (e.g., a flag or index) indicating whether the MHP_IBC mode is allowed may be signaled/parsed. For example, a flag mhp_ibc_flag, which indicates whether the MHP_IBC mode is eallowed, may be signaled/parsed. The name of the flag mhp_ibc_flag is not limited thereto, and flags with various names may be used to indicate whether the MHP_IBC mode is allowed. For example, when the flag mhp_ibc_flag is '1,' the additional reference block is identified as the MHP_IBC mode, and prediction information for the IBC block as the additional reference block may be signaled/parsed. For example, as illustrated in FIG. 15, prediction information for an MHP_IBC_MERGE block may be signaled/parsed.

Finally, when a specific condition is not met or the flag mhp_ibc_flag is '0,' the additional reference block is identified as the MHP_INTER mode, and prediction information for the INTER block as the additional reference block may be signaled/parsed. For example, as illustrated in FIG. 15, prediction information for an MHP_MERGE block may be signaled/parsed.

The method illustrated in FIG. 15 is an example, and various combinations are possible according to the methods listed above. As an example, the flag mhp_intra_flag indicating whether the MHP_INTER mode is allowed may be signaled/parsed, prediction information for an MHP_INTRA block may be signaled/parsed when the flag mhp_intra_flag is '1,' the flag mhp_inter_flag indicating whether the MHP_INTER mode is allowed may be signaled/parsed when the flag mhp_intra_flag is '0,' prediction information for an MHP_INTER block may be signaled/parsed when the flag mhp_inter_flag is '1,' and prediction information for an MHP_IBC block may be signaled/parsed when the flag mhp_inter_flag is '0.'

As an example, the flag mhp_ibc_flag indicating whether the MHP_IBC mode is allowed may be signaled/parsed, and when the flag mhp_ibc_flag is '1,' the prediction information for the MHP_IBC block may be signaled/parsed, and when the flag mhp_ibc_flag is '0,' the flag mhp_intra_flag indicating whether the MHP_INTRA mode is allowed may be signaled/parsed, and when the flag mhp_intra_flag is '1,' the prediction information for the MHP_INTRA block may be signaled/parsed, and when the flag mhp_intra_flag is '0,' the prediction information for the MHP_INTER block may be signaled/parsed. As an example, the flag mhp_ibc_flag indicating whether the MHP_IBC mode is allowed may be signaled/parsed, and when the flag mhp_ibc_flag is '1,' the prediction information for the MHP_IBC block may be signaled/parsed, and when the flag mhp_ibc_flag is '0,' the flag mhp_inter_flag indicating whether the MHP_INTER mode is allowed may be signaled/parsed, and when the flag mhp_inter_flag is '1,' the prediction information for the MHP_INTER block may be signaled/parsed, and when the flag mhp_inter_flag is '0,' the prediction information for the MHP_INTRA block may be signaled/parsed.

As an example, the flag mhp_inter_flag indicating whether the MHP_INTER mode is allowed may be signaled/parsed, and when the flag mhp_inter_flag is '1,' the prediction information for the MHP_INTER block may be signaled/parsed, and when the flag mhp_inter_flag is '0,' the flag mhp_intra_flag indicating whether the MHP_INTRA mode is allowed may be signaled/parsed, and when the flag mhp_intra_flag is '1,' the prediction information for the MHP_INTRA block may be signaled/parsed, and when the flag mhp_intra_flag is '0,' the prediction information for the MHP_IBC block may be signaled/parsed. In an embodiment, the flag mhp_inter_flag indicating whether the MHP_INTER mode is allowed may be signaled/parsed. When the flag mhp_inter_flag is '1,' the prediction information for the MHP_INTER block may be signaled/parsed. When the flag mhp_inter_flag is '0,' the flag mhp_ibc_flag indicating whether the MHP_IBC mode is allowed may be signaled/parsed. When the flag mhp_ibc_flag is '1,' the prediction information for the MHP_IBC block may be signaled/parsed. When the flag mhp_ibc_flag is '0', the prediction information for the MHP_INTRA block may be signaled/parsed.

Specific conditions allowing combinations of each mode (e.g., condition 1 and condition 2 as illustrated in FIG. 15) may include the following items, and may include one or more conditions.

The specific conditions may be related to the prediction mode for the basic block. That is, whether a specific condition is satisfied may be determined based on whether the prediction mode for the basic block is the INTRA mode, the IBC mode, or the INTER mode. For example, when the prediction mode for the basic block is the INTRA mode or IBC mode, the MHP_INTER mode for the additional reference block may be allowed. As another example, when the prediction mode is INTER, MHP_IBC may be allowed.

A-1 The specific condition may be related to the prediction tool applied to the basic block in the INTER mode. In this case, the prediction tool may be related to the generation method of the predicted block, such as affine mode (affine AMVP and affine merge), AMVP mode, basic merge mode, MMVD mode, CIIP mode, or GPM mode. For example, when the basic block is in the AMVP mode, the MHP_INTRA mode for the additional reference block may not be allowed. As another example, when the basic block is in the CIIP mode or the GPM mode, the MHP_INTRA mode and/or the MHP_IBC mode for the additional reference block may not be allowed.

A-2 A specific condition may be the prediction mode for the INTRA mode. That is, whether or not the MHP_INTRA of the additional reference block is allowed may be determined based on the prediction mode for the basic block which is the INTRA mode. For example, when the basic block is the INTRA mode and has the planar mode or the DC mode, the MHP_INTRA mode for the additional reference block may be allowed. As another example, when the basic block has an angular mode with a clear directionality (e.g., horizontal mode, vertical mode, or its adjacent directional mode), the MHP_INTRA mode for the additional reference block may not be allowed. In addition, the allowable prediction mode (e.g., planar mode, DC mode, or angular mode) among the MHP_INTRA modes for the additional reference block may be determined based on the prediction mode for the basic block. For example, when the basic block is the INTRA mode and has the angular mode, non-directional modes (e.g., planar mode and DC mode) among the MHP_INTRA modes for the additional reference block may be allowed.

A-3 A specific condition may be the number of predicted blocks (basic reference blocks) used in a basic block.

A-3-1 When a basic block is in the INTER mode with unidirectional prediction, additional reference blocks in the MHP_INTRA mode, the MHP_INTER mode, or the MHP_IBC mode may be allowed.

A-3-2 When the basic block is in the INTER mode with bidirectional prediction, the limited number of additional reference blocks (additional reference blocks in the MHP_INTRA mode, MHP_INTER mode, or the MHP_IBC mode) may be allowed. For example, one MHP_INTRA may be allowed.

A-3-3 When the basic block includes multi-INTRA blocks, additional reference blocks (in the MHP_INTRA mode, MHP_INTER mode, or the MHP_IBC mode) may not be allowed. For example, when a basic block includes multiple INTRA blocks, this may be because the basic block derives multi-prediction modes using DIMD or TIMD, or because the basic block includes different the INTRA modes in multi-partitioned regions, such as SGPM.

A-3-4 When a basic block includes multi-IBC blocks, additional reference blocks (MHP_INTRA mode, MHP_INTER mode, or the MHP_IBC mode) may not be allowed. For example, when a basic block includes multi-IBC blocks, this may be because the basic block is a block with two or more block vectors, or because the basic block is an IBC block that supports bidirectional prediction.

A-4 The specific condition may be the size of the basic block, the width/height ratio of the basic block, or the block ratio. For example, when the size (width x height) of the basic block is less than 1024, the MHP_INTRA mode or the MHP_IBC mode may be allowed. As another example, when the block size (width x height) is less than 64, the MHP_IBC or MHP_INTER mode may be allowed.

A-5 The specific condition may be the quantization parameter (QP) of the basic block. For example, when the QP of the basic block is less than a threshold, the MHP_INTRA mode or the MHP_IBC mode for the additional reference block may be allowed. In this case, the threshold may be 32. In an embodiment, when the QP is equal to the threshold (e.g., 32), a combination between any one of the basic INTER mode, the basic INTRA mode, or the basic IBC mode and at least one of the MHP_INTER mode, the MHP_INTRA mode, or the MHP_IBC mode may be allowed, or when the QP is greater than the threshold, a combination between any one of the basic INTER mode, the basic INTRA mode, or the basic IBC mode and at least one of the MHP_INTER mode, the MHP_INTRA mode, or the MHP_IBC mode may be allowed, or when the QP is less than the threshold, a combination between any one of the basic INTER mode, the basic INTRA mode, or the basic IBC mode and at least one of the MHP_INTER mode, the MHP_INTRA mode, or the MHP_IBC mode may be allowed.

A-6 The specific condition may be a temporal layer. For example, when the temporal layer is less than a threshold, the MHP_INTRA mode or the MHP_IBC mode for the additional reference block may be allowed. In this case, the threshold of the temporal layer may be 4. For example, when the temporal layer is equal to the threshold (e.g., 4), a combination between any one of the basic INTER mode, the basic INTRA mode, or the basic IBC mode and at least one of the MHP_INTER mode, the MHP_INTRA mode, or the MHP_IBC mode is allowed, or when the temporal layer is greater than the threshold, a combination between any one of the basic INTER mode, the basic INTRA mode, or the basic IBC mode and at least one of the MHP_INTER mode, the MHP_INTRA mode, or the MHP_IBC mode is allowed, or when it is less than the threshold, a combination between any one of the basic INTER mode, the basic INTRA mode, or the basic IBC mode and at least one of the MHP_INTER mode, the MHP_INTRA mode, or the MHP_IBC mode is allowed.

This limited allowance of additional reference blocks may help reduce signaling overhead. The proposed method may be utilized by considering the trade-off between encoder/decoder complexity and performance improvement. Furthermore, the proposed method may utilize only the mode for obtaining information through signaling, only the mode for obtaining information through inheritance and derivation, or a combination of the modes for obtaining information through signaling and inheritance and derivation.

## Embodiment 2

Additional reference blocks may be generated using signaled information or information derived through the inheritance process. Since various combinations of additional reference blocks are possible, additional reference blocks inherited from neighboring blocks may improve compression performance when they meet the following constraints. The following constraints may be used for this purpose:

Inheritance is possible when adjacent/non-adjacent neighboring blocks and the current block have the same basic mode. In an embodiment, when the basic prediction mode for the current block is the basic INTER mode, information for the additional reference block may be inherited from neighboring blocks with the basic INTER mode. In an embodiment, when the basic prediction mode for the current block is the basic INTRA mode, the information about the additional reference blocks may be inherited from neighboring blocks having the basic INTRA mode. In another embodiment, when the basic prediction mode for the current block is the basic IBC mode, the information about the additional reference blocks may be inherited from neighboring blocks having the basic IBC mode.

Inheritance of additional reference block modes may be determined based on a mode priority determined according to the basic mode for the current block. In another embodiment, when neighboring blocks include additional reference blocks of various modes, the order and number of additional reference blocks (or additional prediction modes) inherited from neighboring blocks may be determined based on a mode priority determined according to the basic mode for the current block.

Inheritance of additional prediction modes may be determined based on each allowed combination. For example, when the basic mode is INTER mode and only the MHP_INTRA mode and the MHP_IBC mode are allowed as additional prediction modes, only information about the INTRA mode and IBC mode among the additional reference blocks included in neighboring blocks may be inherited.

Inheritance of additional prediction modes may be determined based on the prediction mode (planar mode, DC mode, or directional mode) of the basic INTRA mode. For example, when the basic mode for the current block is the INTRA mode and has either planar or DC mode, information about the MHP_INTRA mode for neighboring blocks may not be inherited.

In addition to signaling information about additional prediction modes, methods for inheriting information from adjacent/non-adjacent neighboring blocks are described.

The MERGE mode directly borrows motion information from adjacent or non-adjacent blocks without signaling motion information. In multi-reference mode, information about the additional prediction modes included in adjacent or non-adjacent blocks may be derived using the same or similar methods as other information.

As described above, additional reference blocks may be generated by signaling the information about the additional prediction modes (or additional reference blocks) by distinguishing between INTRA, IBC (AMVP, MERGE), and INTER (AMVP, MERGE) modes, corresponding to the number of allowed additional reference blocks. Furthermore, by distinguishing between the additional prediction modes (or additional reference blocks) and inheriting information about them, the additional reference block for the current block may be generated.

Inheritance of the additional prediction mode may be determined based on the following criteria:

A. Basic mode type

When the basic modes for the current block and adjacent/non-adjacent neighboring blocks are the same, the additional prediction mode for the neighboring blocks may be inherited by the current block. Specifically, when the current block is in the INTER mode, the multi-reference block information (information about additional prediction modes) may be inherited from neighboring blocks in the INTER mode. Similarly, when the current block is in the IBC mode or the INTRA mode, the multi-reference block information (information about additional prediction modes) may be inherited from neighboring blocks in the IBC mode or the INTRA mode, respectively.

B. Mode-specific priority

The information about the additional prediction modes may be inherited according to a predefined priority based on the basic mode for the current block. Table 4 illustrates an example of the mode (additional prediction mode) priority of additional reference blocks based on the basic mode (basic prediction mode) of the current block. Depending on each basic mode, the types and number of additional prediction modes allowed, as well as their priorities, may vary.

[Table 4]

| Mode of current block | Priority of multi-reference block |
|---|---|
| INTRA | INTRA→IBC→INTER |
| IBC | IBC→INTRA→INTER |
| INTER | INTER→IBC→INTRA |

In an embodiment according to Table 4, when the basic mode for the current block is the INTER mode and the modes for additional reference blocks of neighboring blocks with the INTER mode as the basic mode are configured in the order of the MHP_IBC mode, the MHP_INTRA mode, and the MHP_INTER mode, the modes for the multi-reference blocks for the current block may be configured in the order of the MHP_INTER mode, the MHP_IBC mode, and the MHP_INTRA mode.

In another embodiment, when the modes for additional reference blocks of neighboring blocks are configured in the order of the MHP_IBC mode 1, the MHP_INTRA mode, and the MHP_IBC mode 2, and the IBC mode has a higher priority, the information about the additional prediction mode may be inherited to the current block in the order of the MHP_IBC mode 1, the MHP_IBC mode 2, and the MHP_INTRA mode.

C. Allowable number of inheritances of additional prediction modes according to basic mode

The information about the additional prediction mode may be inherited according to the allowable number of additional prediction modes for each basic mode. In an embodiment, only one prediction mode may be inherited for each prediction mode for each additional reference block. For example, when the neighboring block includes additional reference blocks and additional reference blocks in MHP_INTER mode 1, MHP_INTER mode 2, and one MHP_IBC mode, the MHP_INTER mode 1 and the MHP_IBC mode may be inherited as additional prediction modes for the current block. A neighboring block including the MHP_INTER mode 1, the MHP_INTER mode 2, and one MHP_IBC mode may have the inherited MHP_INTER mode 1, the MHP_IBC mode, and MHP_INTER mode 2. In other words, the allowable number of inheritances for each additional reference block (additional prediction mode) may be applied separately from the allowable number of signaled additional prediction modes.

D. Allowable combinations with additional prediction mode according to basic mode

The inheritance of additional prediction modes may be determined based on the allowable combinations with additional prediction modes according to the basic mode. In an embodiment, when only combinations of the MHP_INTER mode and the MHP_IBC mode are allowed for the basic INTER mode, only the information of the MHP_INTER mode and the MHP_IBC mode among the information about the additional reference blocks included in the neighboring blocks may be inherited to the current block. This is an example, and combinations with possible additional prediction modes depending on the basic mode and the number of allowed inheritances according to the basic mode within the possible combinations may be determined. In addition, the allowed combinations for inheritance of additional reference blocks (additional prediction modes) and the allowed combinations of signaled additional prediction modes may be independent.

E. Prediction mode for basic INTRA block

The inheritance of additional prediction modes may be determined based on the prediction mode for the basic INTRA mode. For example, when the basic mode for the current block is the INTRA mode and the planar mode or the DC mode, the information about the MHP_INTRA mode for the neighboring block may not be inherited. Another example is when the basic mode for the current block is the INTRA mode and directional mode, the information about the MHP_INTER mode and the MHP_IBC mode for the neighboring block may not be inherited. This is merely an example, and various combinations may be allowed depending on the prediction mode for the INTRA mode for the current block and the type and prediction mode for the additional reference block of the neighboring block.

## **Embodiment 3**

Additional reference blocks may be generated using information signaled or derived through the inheritance process. Additionally, additional reference blocks in MHP_INTER mode, the MHP_IBC mode, and/or the MHP_INTRA mode may be derived based on the TM.

For example, the additional reference blocks in the MHP_IBC mode and/or MHP_INTER mode may be generated based on the TM. The TM may be applied particularly in the MERGE mode (MHP_IBC mode or MHP_INTER mode).

The additional reference blocks in the MHP_INTER mode and/or the MHP_IBC mode derived based on the TM may be initially searched for integer-pel units based on the base motion vector and/or the base block vector. Subsequently, additional searches may be performed for fractional-pel units based on the location with the smallest error (or cost). Subsequently, the INTER mode block and/or the IBC mode block with the refined motion vector and/or refined block vector at the location with the smallest error (or cost) may be used as the additional reference block.

The base motion vector may be motion information indicated by the MVP index or the BVP index in the MERGE mode. The search process (initial search and/or additional search) may be performed within a predefined search range.

The error (or cost) may refer to various types of errors or costs, such as the sum of absolute errors, the mean of absolute errors, the sum of squared errors, and the mean of squared errors. The error (or cost) is calculated based on the difference between the template region of the current block and the template region of the predicted block, and may be calculated as sum of absolute difference (SA(T)D), mean reduced-sum of absolute difference (MR-SA(T)D), sum squared error (SSE), or mean squared error (MSE). The error (or cost) may be multiplied by different weights depending on the specific region and location within the search range.

The additional reference blocks in the MHP_INTRA mode may be generated based on the TM. In the MHP_INTRA mode, the error (or cost) between the reconstructed sample within the template region of the current block and the predicted sample generated from the reference sample within the template region is calculated, and the mode with the smallest error (or cost) may be selected.

The prediction mode for calculating the error (or cost) may be determined within the MPM configured for the MHP_INTRA mode. The MPM may include a planar mode, a horizontal mode, a vertical mode, etc., as basic, and may include one or more modes.

With respect to a block of the above the MHP_INTRA mode, the prediction mode for the MHP_INTRA mode may be determined using the following process: calculating horizontal gradients and vertical gradients by applying a Sobel filter within the template region of the current block, obtaining a histogram of gradients (HoG) based on the horizontal and vertical gradients, deriving an angular mode based on the gradient histogram, and using the derived angular mode as a prediction mode for the MHP_INTRA mode.

The prediction mode for the MHP_INTRA mode based on the HoG may include one or more modes, depending on the allowed number.

Hereinafter, a specific method of deriving the additional reference block (or an additional prediction mode) without signaling/parsing information about the additional reference block (or an additional prediction mode) will be described.

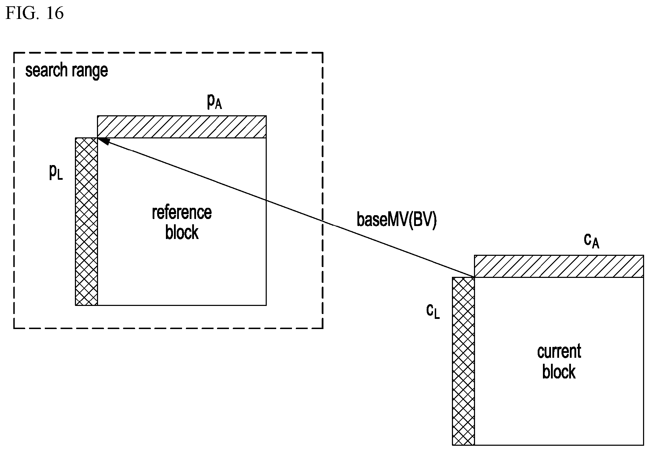

FIG. 16 is a diagram illustrating a method of deriving additional reference blocks based on the TM in the multi-reference mode according to an embodiment of the present disclosure. Specifically, a method of deriving additional reference blocks in MHP_INTER mode and/or the MHP_IBC mode based on the TM is illustrated.

The process described in this embodiment may be used when the basic mode for the current block is the INTER mode. In particular, the process described in this embodiment may be applied when the basic mode for the current block is the MERGE mode. However, this is not limited thereto, and the process described in this embodiment may also be applied when the basic mode for the current block is AMVP mode.

Specifically, as illustrated in FIG. 16, motion vector refinement (MV refinement) based on the TM may be performed within a search range using the motion vector of the block indicated by the motion vector predictor (MVP) index as the base motion vector (baseMV). Using the improved motion vector, an INTER predicted block may be generated as the additional reference block. The motion vector refinement (MV refinement) process may be performed in the following order:

A. Based on the base motion vector (baseMV), the location with the smallest error (or cost) is determined by searching integer-pel units.

B. If possible, a fractional-pixel search is performed based on the location with the error (or cost) to determine the location with the smallest error (or cost).

C. The location with the smallest error (or cost) is designated as the refined motion vector (refinedMV), and the block with the refined motion vector (refinedMV) is designated as a block in the MHP_INTER mode, thereby generating a predicted block. When the base motion vector (baseMV) and the refined motion vector (refinedMV) are identical, the process of generating the additional reference block may be omitted.

The process described in this embodiment may be used when the basic mode for the current block is IBC mode. In particular, the process described in this embodiment may be applied when the basic mode for the current block is the MERGE mode. However, this is not limited thereto, and the process described in this embodiment may also be applied when the basic mode for the current block is the AMVP mode.

Specifically, the TM-based block vector refinement (BV refinement) may be performed within a search range, as illustrated in FIG. 16, using the motion information (block vector) of the block pointed to by the block vector predictor (BVP) index as the base block vector (baseBV). Using the refined block vector, an IBC predicted block may be generated as the additional reference block. The BV refinement process may be performed in the following order:

A. Based on the base block vector (baseBV), the location with the smallest error (or cost) is determined by searching integer-pel units.

B. If possible, based on the location with the error (or cost), a search is performed on a fractional-pel basis to determine the location with the smallest error (or cost).

C. By designating the location with the smallest error (or cost) as the refined block vector (refinedBV), and designating the block with the refined block vector (refinedBV) as a block in the MHP_IBC mode, a predicted block is generated. In this case, when the base block vector (baseBV) and the refined block vector (refinedBV) are identical, the process of generating additional predicted blocks may be omitted.

The search process described above may be performed within a search range, and weights may be applied to the error (or cost) based on each search position or area within the search range during the search process. In an embodiment, the selectivity of a specific area may be increased by calculating as in [Equation 8].

$$[\text{Equation 8}]$$

$$\text{bestCost} = \lambda * \text{cost}, \ (\lambda < 1.0)$$

For example, cost may represent the error (or cost), and $\lambda$ may be assigned a smaller value the closer it is to the location indicated by the base motion vector (baseMV) or base block vector (baseBV).

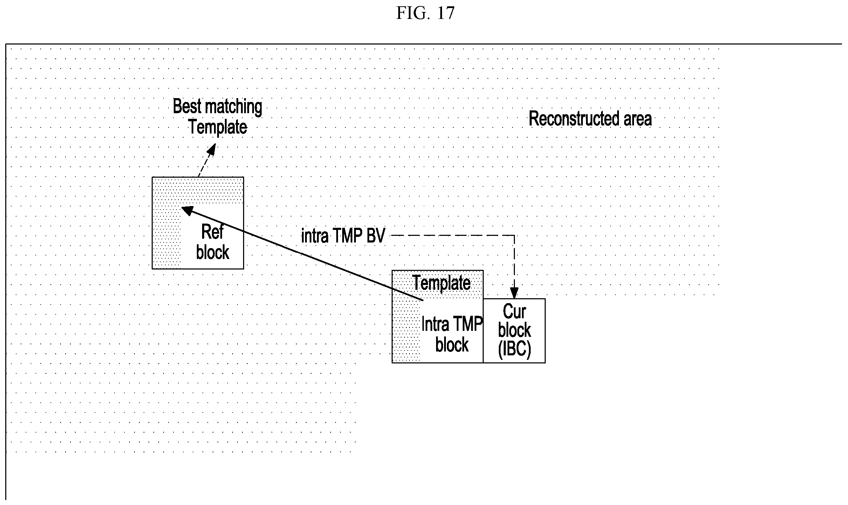

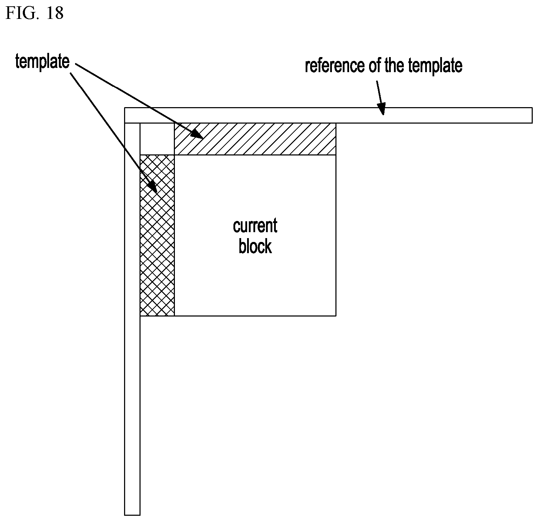

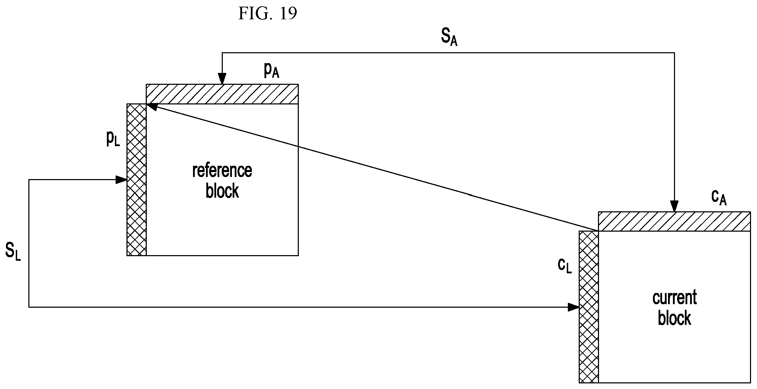

FIG. 17 is a diagram illustrating a method of deriving additional reference blocks based on an intra-templete matching prediction used in the multi-reference mode according to an embodiment of the present disclosure. FIG. 18 is a diagram illustrating a method of deriving the additional reference block based on TIMD used in the multi-reference mode according to an embodiment of the present disclosure. FIG. 19 is a diagram illustrating a method of calculating an error (or cost) for deriving the additional reference block in the multi-reference mode according to an embodiment of the present disclosure.

A derivation method based on an intra-templete matching prediction (IntraTMP) may be used to derive the MHP_IBC block. In other words, as illustrated in FIG. 17, through the multi-reference matching prediction (IntraTMP), the error (or cost) between the template region of an encoded/decoded adjacent block and the template region of a block pointed to by the block vector of the adjacent block may be used and the location with the smallest error (or cost) may be used as the block vector of the MHP_IBC block for the current block.

When the basic mode for the current block is the INTRA mode, the process described in this embodiment may be used.

When certain conditions are met, the INTRA predicted block may be generated as the additional reference block, and the MHP_INTRA block may be derived using the following method.

A. The prediction mode for the MHP_INTRA mode may be utilized similarly to the TIMD method described above. Specifically, as illustrated in FIG. 18, the error (or cost) between the reconstructed sample within the template region of the current block and the predicted sample generated from the reference sample within the template region is calculated, and the mode with the smallest error (or cost) may be selected. The prediction mode for calculating the error (or cost) may be determined within the MPM configured for the MHP_INTRA mode. The MPM may include a planar mode, a horizontal mode, a vertical mode as basic, and one or more modes.

B. The prediction mode for the MHP_INTRA mode may be utilized similarly to the DIMD method described above. In other words, by applying a Sobel filter within the template region of the current block, a horizontal gradient and a vertical gradient are calculated, and the HoG may be obtained based on the horizontal gradient and the vertical gradient. An angular mode is derived based on the gradient histogram, and the derived angular mode may be used as a prediction mode for the MHP_INTRA mode. The prediction mode for the MHP_INTRA mode based on the HoG may include one or more modes depending on the allowable number.

The error (or cost) used in the process of deriving a block in the MHP_INTER mode and/or a block in the MHP_IBC mode may be calculated as follows. For example, as illustrated in FIG. 19, based on the error between adjacent samples (cA, cL) of the current block and adjacent samples (pA, pL) of the reference block pointed to by the base motion vector (baseMV) or base block vector baseBV, a block in MHP_INTER mode and/or the MHP_IBC mode may be generated when the error is greater than a threshold.

Specifically, the error SA between the upper adjacent sample (cA) of the current block and the upper adjacent sample (pA) of the predicted block may be compared to a threshold, or the error SL between the left adjacent sample (cL) of the current block and the left adjacent sample (pL) of the predicted block may be compared to a threshold. Additionally, both the error SA associated with the upper adjacent sample and the error SL associated with the left adjacent sample may be compared to a threshold. For convenience of explanation, the error for the top-left adjacent sample is not described. However, the sample at that location may be considered when calculating the inter-sample error using the upper adjacent sample, the left adjacent sample, or the top-left adjacent sample.

The threshold may be set using Equations 9 and 10.

[Equation 9]

$$\text{threshold} = \text{width} * \text{template height} / \lambda$$

[Equation 10]

$$\text{threshold} = \text{template width} * \text{height} / \lambda$$

For example, $\lambda$ may be set to a value that satisfies $\lambda > 1$.

Here, the error (or cost) between samples (or sample values) may be calculated using the following methods, and a combination of the following methods may be applied.

The error (or cost) may be calculated by considering the sum of absolute differences (SAD) between samples. In other words, the error (or cost) may be calculated as in Equation 11. In [Equation 11], c and p represent adjacent samples of the current block and the predicted block, respectively, and x represents the location of the adjacent sample. Furthermore, this equation may be applied to N samples within the upper, left, or upper-left regions.

[Equation 11]

$$error(cost) = \sum_{x=0}^{N-1} |c[x] - p[x]|$$

The error (or cost) may be calculated by considering the mean reduced-sum of absolute difference (MR-SAD) between samples. In other words, the error (or cost) may be calculated as in [Equation 12]. In [Equation 12], c and p represent adjacent samples of the current block and the predicted block, respectively, and x represents the location of the adjacent sample. Furthermore, this equation may be applied to N samples within the upper, left, or upper-left regions.

[Equation 12]

$$diff = \frac{1}{N}\left(\sum_{x=0}^{N-1} |c[x]| - \sum_{x=0}^{N-1} |p[x]|\right)$$

$$error\ (cost) = \sum_{x=0}^{N-1} |c[x] - p[x] - diff|$$

The error (or cost) may be calculated by considering the SSE between samples. In other words, the error (or cost) may be calculated as in [Equation 13]. In [Equation 13], c and p represent adjacent samples of the current block and the predicted block, respectively, and x represents the location of the adjacent sample. Furthermore, this may be applied to N samples within the upper, left, or upper-left regions.

[Equation 13]

$$error(cost) = \sum_{x=0}^{N-1} (c[x] - p[x])^2$$

The error (or cost) may be calculated by considering the MSE between samples. In other words, this may be calculated as in [Equation 14]. In [Equation 14], c and p represent adjacent samples of the current block and the predicted block, respectively, and x represents the location of the adjacent sample. Furthermore, this may be applied to N samples within the upper, left, or upper-left regions.

[Equation 14]

$$error(cost) = \frac{1}{N}\left(\sum_{x=0}^{N-1} (c[x] - p[x])^2\right)$$

The method of calculating the error (or cost) for each block may vary depending on the characteristics of the block. For example, the error may be calculated by considering MR-SAD for a block to which LIC is applied. As another example, the error may be calculated by considering MR-SAD for a block to which BCW is applied. As another example, the cost may be calculated by considering SAD for a block to which DMVR and BDOF are applied.

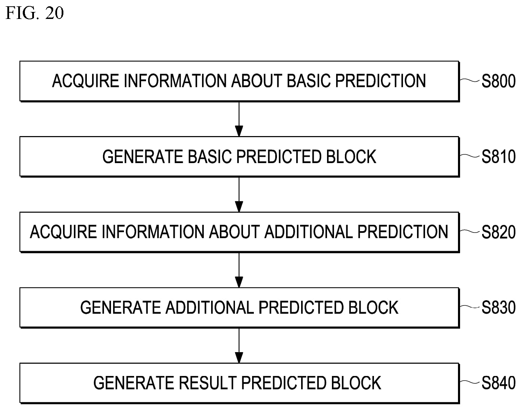

FIG. 20 illustrates a decoding method according to an embodiment of the present disclosure. The steps or operations illustrated in FIG. 20 are not essential components of the prediction method, and at least some of the steps or operations illustrated in FIG. 20 may be omitted.

Referring to FIG. 20, the decoding device may obtain information about basic prediction (S800).

For example, basic prediction may be a series of processes for generating basic predicted samples. Basic prediction may be any of intra prediction, inter prediction, or inter-block prediction.

The decoding processor of the decoding device may parse information about the basic prediction for the current block from the bitstream, inherit it from neighboring blocks, or derive it using a specific tool.

Information about the basic prediction may include indexing information specifying the basic prediction and/or generation information for generating the basic predicted block. For example, the decoding processor may parse the indexing information of the basic prediction and the generation information of the basic predicted block from the bitstream. As another example, the decoding processor may parse the indexing information of the basic prediction and inherit the generation information of the basic predicted block from a neighboring block based on the indexing information. As another example, the decoding processor may parse the indexing information of the basic prediction and derive the generation information of the basic predicted block using a tool based on the indexing information.

The decoding device may generate the basic predicted block (S810).

For example, the decoding processor may generate the basic predicted block based on information about the basic prediction. The decoding processor may generate the basic predicted block based on generation information of the parsed basic predicted block or based on generation information of an inherited basic predicted block. Furthermore, the decoding processor may generate the basic predicted block based on generation information of the derived basic predicted block.

The decoding device may obtain information about additional prediction (S820).

For example, the decoding processor of the decoding device may obtain information about additional prediction. In a broad sense, additional prediction may refer to a prediction process other than basic prediction, and in a narrow sense, it may refer to a series of processes for generating additional predicted samples.

Information about additional prediction may include additional prediction availability information indicating whether additional prediction is performed, prediction mode indexing information indicating an additional prediction mode, and additional block generation information for generating an additional predicted block.

The decoding processor may obtain prediction mode indexing information indicating an additional prediction mode based on additional prediction availability information, and may obtain block generation information for generating an additional predicted block based on the prediction mode indexing information. The decoding processor may parse the additional prediction availability information, prediction mode indexing information, and additional block generation information from the bitstream.

The decoding processor may parse the additional block generation information for generating an additional predicted block based on the satisfaction of a predetermined condition. The predetermined condition may include at least one of: (i) whether the additional prediction mode is allowed for the basic prediction mode, (ii) whether the additional prediction mode is allowed for a tool applied in the basic prediction mode, (iii) whether the additional prediction mode is allowed for the width or height of the current block, (iv) whether the additional prediction mode is allowed based on the quantization parameters of the current block, and (v) whether the additional prediction mode is allowed based on the temporal layer of the current block.

The decoding processor may inherit the block generation information for generating an additional predicted block based on the additional prediction availability information. For example, the decoding processor may inherit additional block generation information for a neighboring block that has the same basic prediction mode as the basic prediction mode for the current block. The decoding processor may derive additional prediction modes for neighboring blocks that have the same basic prediction mode as the basic prediction mode for the current block, and inherit additional block generation information for the additional prediction modes for neighboring blocks selected based on a priority for inheritance of the additional prediction modes. The decoding processor may derive additional prediction modes for neighboring blocks that have the same basic prediction mode as the basic prediction mode for the current block, and inherit additional block generation information for the additional prediction modes for neighboring blocks allowed based on the basic prediction mode for the current block.

The decoding processor may derive block generation information for generating an additional predicted block based on the additional prediction availability information. The decoding processor may derive additional prediction performance information for performing the additional prediction using the TM method. The decoding processor may derive additional prediction performance information for performing the additional prediction using at least one of a TIMD method or a DIMD method.

Additionally, the additional prediction may be one or more of intra prediction, inter prediction, or IBC. In other words, multiple additional predictions may be applied. For example, a first additional prediction, a second additional prediction, a third additional prediction, ..., and an n-th additional prediction may be applied. The decoding processor may obtain information about the first additional prediction and information about the second additional prediction.

The decoding device may generate an additional predicted block (S830).

For example, the decoding processor may generate an additional predicted block based on the information about the additional prediction. The decoding processor may generate an additional predicted block based on generation information of a parsed additional predicted block or generate the basic predicted block based on generation information of an inherited additional predicted block. Furthermore, the decoding processor may generate an additional predicted block based on generation information of the derived additional predicted block.

A first additional prediction, a second additional prediction, a third additional prediction, ..., and an n-th additional prediction may be applied, and the decoding processor may generate a first additional predicted block and a second additional predicted block.

The decoding device may generate the final predicted block for the current block based on the merging of the basic predicted block and the additional predicted block (S840).

For example, the decoding processor may generate the final predicted block for the current block by weighting-sum or weighting-averaging the basic predicted block and the additional predicted blocks.

A first additional prediction, a second additional prediction, a third additional prediction, ..., and an n-th additional prediction may be applied, and the decoding processor may generate the final predicted block for the current block by weighting-sum or weighting-averaging the basic predicted block, the first additional predicted block, and the second additional predicted block.

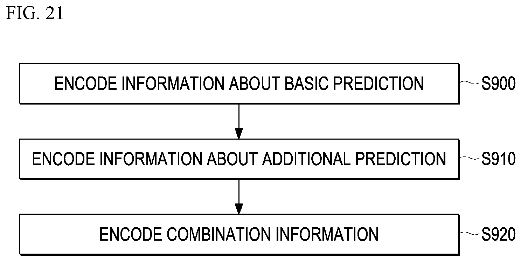

FIG. 21 illustrates an encoding method according to an embodiment of the present disclosure. The steps or operations illustrated in FIG. 21 are not essential components of the prediction method, and at least some of the steps or operations illustrated in FIG. 21 may be omitted.

The encoding device may encode information about the basic prediction for generating the basic predicted block (S900).

For example, the encoding processor of the encoding device may encode information about the basic prediction for generating the basic predicted block by performing basic prediction.

The encoding device may encode information about additional prediction for generating an additional predicted block (S910).

For example, the encoding processor may encode information about additional prediction for generating an additional predicted block by performing additional prediction.

The encoding device may encode merging information for generating the final predicted block for the current block (S920).

For example, the encoding processor may encode merging information for generating the final predicted block for the current block based on the merging of the basic predicted block and the additional predicted block.

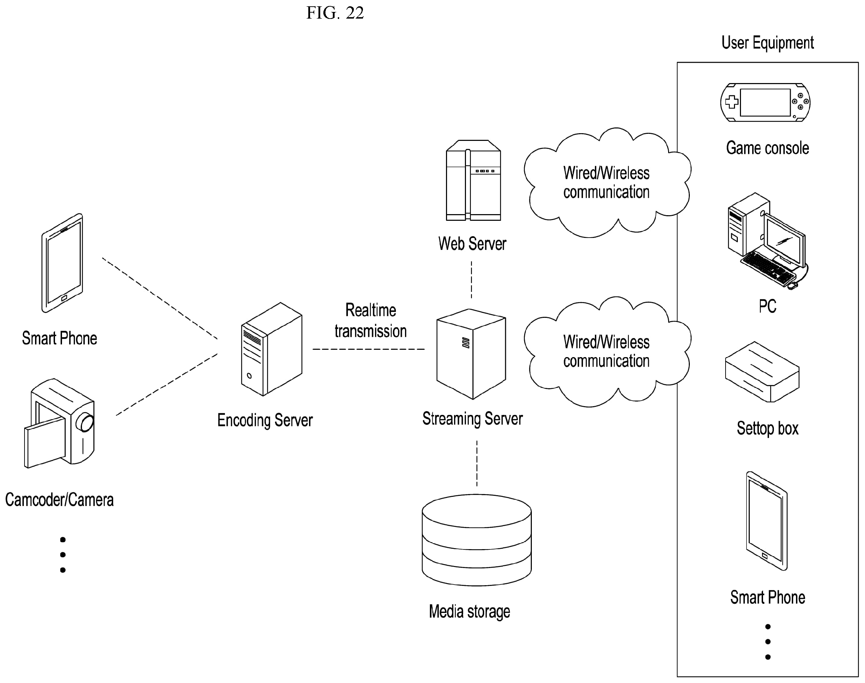

FIG. 22 shows an example of a contents streaming system to which embodiments of the present disclosure may be applied.

Referring to FIG. 22, a contents streaming system to which embodiment(s) of the present disclosure are applied may largely include an encoding server, a streaming server, a web server, a media storage, a user device and a multimedia input device.

The encoding server generates a bitstream by compressing contents input from multimedia input devices such as a smartphone, a camera, a camcorder, etc. into digital data and transmits it to the streaming server. As another example, when multimedia input devices such as a smartphone, a camera, a camcorder, etc. directly generate a bitstream, the encoding server may be omitted.

The bitstream may be generated by an encoding method or a bitstream generation method to which embodiment(s) of the present disclosure are applied, and the streaming server may temporarily store the bitstream in a process of transmitting or receiving the bitstream.

The streaming server transmits multimedia data to a user device based on a user's request through a web server, and the web server serves as a medium to inform a user of what service is available. When a user requests desired service from the web server, the web server delivers it to a streaming server, and the streaming server transmits multimedia data to a user. In this case, the contents streaming system may include a separate control server, and in this case, the control server controls a command/a response between each device in the content streaming system.

The streaming server may receive contents from a media storage and/or an encoding server. For example, when contents is received from the encoding server, the contents may be received in real time. In this case, in order to provide smooth streaming service, the streaming server may store the bitstream for a certain period of time.

An example of the user device may include a mobile phone, a smart phone, a laptop computer, a digital broadcasting terminal, a personal digital assistants (PDAs), a portable multimedia players (PMP), a navigation, a slate PC, a Tablet PC, an ultrabook, a wearable device (e.g., a smartwatch, a smart glass, a head mounted display (HMD), a digital TV, a desktop, a digital signage, etc.

Each server in the contents streaming system may be operated as a distributed server, and in this case, data received from each server may be distributed and processed.

The claims set forth herein may be combined in various ways. For example, a technical characteristic of a method claim of the present disclosure may be combined and implemented as a device, and a technical characteristic of a device

**33**

claim of the present disclosure may be combined and implemented as a method. In addition, a technical characteristic of a method claim of the present disclosure and a technical characteristic of a device claim may be combined and implemented as a device, and a technical characteristic of a method claim of the present disclosure and a technical characteristic of a device claim may be combined and implemented as a method.

[Industrial Applicability]

The embodiments of the present disclosure may be used to encode or decode an image.

**Claims**

1. A decoding method comprising:

   obtaining information on a regular prediction;
   generating a regular prediction block by performing the regular prediction based on the information on the regular prediction;
   obtaining information on an additional prediction; and
   generating an additional prediction block by performing the additional prediction based on the information on the additional prediction;
   generating a final prediction block for a current block based on a weighted averaging of the regular prediction block and the additional prediction block,
   wherein the regular prediction includes any one of an intra prediction, an inter prediction or an intra block copy (IBC), and
   wherein the additional prediction includes at least one of the intra prediction, the inter prediction or the IBC.

2. The method of claim 1, wherein the obtaining of the information on the additional prediction comprises:

   obtaining additional prediction availability information indicating whether or not to perform the additional prediction,
   obtaining prediction mode indexing information indicating an additional prediction mode based on the additional prediction availability information, and
   obtaining additional block generation information for generating the additional prediction block based on the mode indexing information,
   wherein the additional block generation information includes at least one of intra block generation information, inter block generation information or IBC block generation information.

3. The method of claim 2, wherein the obtaining of the additional block generation information for generating the additional prediction block comprises:

   obtaining the additional block generation information for generating the additional prediction block based on a preset condition being satisfied,
   wherein the preset condition includes at least one of:

   whether the additional prediction mode is allowed for a regular prediction mode,
   whether the additional prediction mode is allowed for a tool applied in the regular prediction mode,
   whether the additional prediction mode is allowed for a width or a height of the current block,
   whether the additional prediction mode is allowed for a quantization parameter (QP) of the current block, or
   whether the additional prediction mode is allowed for a temporal layer of the current block.

4. The method of claim 1, wherein the obtaining of the information on the additional prediction comprises:

   obtaining additional prediction availability information indicating whether or not to perform the additional prediction,
   inheriting additional block generation information for generating the additional prediction block based on the additional prediction availability information, and
   wherein the additional block generation information includes at least one of intra block generation information, inter block generation information or IBC block generation information.

**5.** The method of claim 4, wherein the inheriting of the additional block generation information for generating the additional prediction block comprises:
inheriting an additional block generation information of a neighboring block with the same regular prediction mode with a regular prediction mode for the current block.

**6.** The method of claim 4, wherein the inheriting of the additional block generation information for generating the additional prediction block comprises:

deriving an additional prediction mode of a neighboring block with the same regular prediction mode with a regular prediction mode for the current block, and
inheriting the additional block generation information for the additional prediction mode of the neighboring block selected based on a priority for inheritance of the additional prediction mode.

**7.** The method of claim 4, wherein the inheriting of the additional block generation information for generating the additional prediction block comprises:

deriving an additional prediction mode of a neighboring block with the same regular prediction mode with a regular prediction mode for the current block, and
inheriting the additional block generation information for the additional prediction mode of the neighboring block allowed based on the regular prediction mode for the current block.

**8.** The method of claim 1, wherein the obtaining of the information on the additional prediction comprises:

obtaining additional prediction availability information indicating whether or not to perform the additional prediction,
deriving additional block generation information for generating the additional prediction block based on the additional prediction availability information, and
wherein the additional block generation information includes at least one of intra block generation information, inter block generation information or IBC block generation information.

**9.** The method of claim 8, wherein the deriving of the additional prediction execution information for performing the additional prediction comprises:
deriving the additional prediction execution information using a template matching method.

**10.** The method of claim 8, wherein the deriving of the additional prediction execution information for performing the additional prediction comprises:
deriving the additional prediction execution information using at least one of a template-based intra mode derivation (TIMD) method or a directional intra mode derivation (DIMD) method.

**11.** The method of claim 1, wherein the information on the additional prediction comprises information on a first additional prediction and information on a second additional prediction,

the additional prediction block comprises a first additional prediction block and a second additional prediction block, and
the generating of the final prediction block comprises generating a final prediction block based on a weighted averaging of the regular prediction block, the first additional prediction block and the second additional prediction block.

**12.** An encoding method comprising:

encoding information on a regular prediction for generating a regular prediction block by performing the regular prediction;
encoding information on an additional prediction for generating an additional prediction block by performing the additional prediction; and
encoding information on a weighted averaging for generating a final prediction block for a current block based on the weighted averaging of the regular prediction block and the additional prediction block,
wherein the regular prediction includes any one of an intra prediction, an inter prediction or an intra block copy (IBC), and

wherein the additional prediction includes at least one of the intra prediction, the inter prediction or the IBC.

13. A transmitting method for image information, the method comprising:

encoding information on a regular prediction for generating a regular prediction block by performing the regular prediction;

encoding information on an additional prediction for generating an additional prediction block by performing the additional prediction;

encoding information on a weighted averaging for generating a final prediction block for a current block based on the weighted averaging of the regular prediction block and the additional prediction block; and

transmitting the image information including the encoded information on the regular prediction, the encoded information on the additional prediction and the encoded information on the weighted averaging,

wherein the regular prediction includes any one of an intra prediction, an inter prediction or an intra block copy (IBC), and

wherein the additional prediction includes at least one of the intra prediction, the inter prediction or the IBC.

FIG. 1

| SOURCE DEVICE | | RECEIVING DEVICE |
|---|---|---|
| VIDEO SOURCE | | RENDERER |
| ENCODING APPARATUS | | DECODING APPARATUS |
| TRANSMITTER | → | RECEIVER |

FIG. 2

ENCODING APPARATUS 200

INPUT IMAGE (PICTURE) → IMAGE PARTITIONER 210 → (+/−) 231 → TRANSFORMER 232 → QUANTIZER 233 → ENTROPY ENCODER 240 → BITSTREAM

230

DPB 270 / MEMORY → INTER PREDICTOR (221) / INTRA PREDICTOR (222) 220

FILTER 260

250 → INVERSE TRANSFORMER 235 ← DEQUANTIZER 234

EP 4 779 974 A1

38

FIG. 3

FIG. 4

FIG. 5

GENERATE PREDICTED SAMPLE — S400

DERIVE RESIDUAL SAMPLE — S410

ENCODE IMAGE INFORMATION — S420

FIG. 6

```
┌─────────────────────────────┐
│  DETERMINE PREDICTION MODE  │──── S500
└─────────────────────────────┘
               │
               ▼
┌─────────────────────────────┐
│  DERIVE MOTION INFORMATION   │──── S510
└─────────────────────────────┘
               │
               ▼
┌─────────────────────────────┐
│  GENERATE PREDICTED SAMPLE   │──── S520
└─────────────────────────────┘
               │
               ▼
┌─────────────────────────────┐
│    DERIVE RESIDUAL SAMPLE    │──── S530
└─────────────────────────────┘
               │
               ▼
┌─────────────────────────────┐
│ GENERATE RECONSTRUCTED SAMPLE│──── S540
└─────────────────────────────┘
```

FIG. 7

```
┌────────────────────────────────────┐
│  DETERMINE INTER PREDICTION MODE   │──S600
└────────────────────────────────────┘
                  │
                  ▼
┌────────────────────────────────────┐
│      DERIVE MOTION INFORMATION     │──S610
└────────────────────────────────────┘
                  │
                  ▼
┌────────────────────────────────────┐
│      GENERATE PREDICTED SAMPLE     │──S620
└────────────────────────────────────┘
```

FIG. 8

FIG. 9

FIG. 10

Reference frame        Current frame

FIG. 11

| GENERATE BASIC PREDICTED BLOCK | ～S700 |

↓

| DERIVE ADDITIONAL REFERENCE BLOCK | ～S710 |

↓

| GENERATE FINAL PREDICTED BLOCK | ～S720 |

FIG. 12

<ref. block, P0>          <Current block, C>          <ref. block, P1>

<ref. block, P2>          <ref. block, P3>

FIG. 13

```
                    ┌──────────────┐
                    │    START     │
                    └──────┬───────┘
                           │ i = 0
                           ▼
                    ╱────────────────╲         NO
        ┌─────────◄  while (i < MaxNum) ├──────────────────────┐
        │          ╲────────────────╱                          │
        │                  │ YES                                │
        │                  ▼                                    │
        │          ┌──────────────────┐                        │
        │          │  PARSE mhp_flag  │                        │
        │          └────────┬─────────┘                        │
        │                   │                                  │
        │                   ▼                                  │
        │           ╱────────────────╲        NO               │
        │          ◄  if (mhp_flag)    ├─────────────────────┐ │
        │           ╲────────────────╱                       │ │
        │                   │ YES                             │ │
   i ++ │                   ▼                                 │ │
        │          ┌──────────────────┐                      │ │
        │          │  PARSE mhp_mrg   │                      │ │
        │          └────────┬─────────┘                      │ │
        │                   │                                 │ │
        │                   ▼                                 │ │
        │           ╱────────────────╲       NO               │ │
        │          ◄  if (mhp_mrg)     ├──────────┐           │ │
        │           ╲────────────────╱            │           │ │
        │                   │ YES                 ▼           │ │
        │                   ▼          ┌──────────────────┐   │ │
        │          ┌──────────────────┐│ REFERENCE INDEX, │   │ │
        │          │  MERGE INDEX,    ││   MVP INDEX,     │   │ │
        │          │  WEIGHT INDEX    ││   MVD INDEX,     │   │ │
        │          └────────┬─────────┘│  WEIGHT INDEX    │   │ │
        └───────────────────┤          └────────┬─────────┘   │ │
                            ▼                   │             │ │
                    ┌──────────────┐◄───────────┘             │ │
                    │     END      │◄─────────────────────────┘ │
                    └──────────────┘                            │
```

FIG. 14

```
┌──────────────┐          ┌──────────────────┐
│  INTRA mode  │────┬────▶│    MHP_INTRA     │
└──────────────┘    │     └──────────────────┘
                    │     ┌──────────────────┐
                    ├────▶│     MHP_IBC      │
                    │     └──────────────────┘
                    │     ┌──────────────────┐
                    └────▶│    MHP_INTER     │
                          └──────────────────┘

┌──────────────┐          ┌──────────────────┐
│   IBC mode   │────┬────▶│    MHP_INTRA     │
└──────────────┘    │     └──────────────────┘
                    │     ┌──────────────────┐
                    ├────▶│     MHP_IBC      │
                    │     └──────────────────┘
                    │     ┌──────────────────┐
                    └────▶│    MHP_INTER     │
                          └──────────────────┘

┌──────────────┐          ┌──────────────────┐
│  INTER mode  │────┬────▶│    MHP_INTRA     │
└──────────────┘    │     └──────────────────┘
                    │     ┌──────────────────┐
                    ├────▶│     MHP_IBC      │
                    │     └──────────────────┘
                    │     ┌──────────────────┐
                    └────▶│    MHP_INTER     │
                          └──────────────────┘
```

Regular blocks                    Multi-hypothesis blocks

FIG. 15

FIG. 16

FIG. 17

FIG. 18

template

reference of the template

current
block

FIG. 19

EP 4 779 974 A1

FIG. 20

| ACQUIRE INFORMATION ABOUT BASIC PREDICTION | S800 |
| GENERATE BASIC PREDICTED BLOCK | S810 |
| ACQUIRE INFORMATION ABOUT ADDITIONAL PREDICTION | S820 |
| GENERATE ADDITIONAL PREDICTED BLOCK | S830 |
| GENERATE RESULT PREDICTED BLOCK | S840 |

FIG. 21

| ENCODE INFORMATION ABOUT BASIC PREDICTION | ~S900 |

| ENCODE INFORMATION ABOUT ADDITIONAL PREDICTION | ~S910 |

| ENCODE COMBINATION INFORMATION | ~S920 |

FIG. 22

Smart Phone

Camcoder/Camera

Encoding Server

Realtime
transmission

Streaming Server

Web Server

Wired/Wireless
communication

Wired/Wireless
communication

Media storage

User Equipment

Game console

PC

Settop box

Smart Phone

EP 4 779 974 A1

## INTERNATIONAL SEARCH REPORT

| International application No. |
|---|
| **PCT/KR2024/013998** |

| | |
|---|---|
| **A.** | **CLASSIFICATION OF SUBJECT MATTER** |

**H04N 19/107**(2014.01)i; **H04N 19/593**(2014.01)i; **H04N 19/176**(2014.01)i; **H04N 19/105**(2014.01)i; **H04N 19/70**(2014.01)i; **H04N 19/159**(2014.01)i; **H04N 19/11**(2014.01)i

According to International Patent Classification (IPC) or to both national classification and IPC

| | |
|---|---|
| **B.** | **FIELDS SEARCHED** |

Minimum documentation searched (classification system followed by classification symbols)

H04N 19/107(2014.01); H04N 19/00(2014.01); H04N 19/103(2014.01); H04N 19/105(2014.01); H04N 19/119(2014.01); H04N 19/157(2014.01); H04N 19/577(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 기본(base), 예측(prediction), 추가(addition), 인트라(intra), 인터 (inter), 인트라 블록 카피(intra block copy, IBC), 가중(weight)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | WO 2023-030504 A1 (BEIJING BYTEDANCE NETWORK TECHNOLOGY CO., LTD. et al.) 09 March 2023 (2023-03-09)<br>See paragraphs [0043], [0078] and [0081]-[0083]; and claims 1-2, 34-35, 49, 62-63, 65, 77 and 99. | 1-13 |
| A | KR 10-2021-0154760 A (ELECTRONICS AND TELECOMMUNICATIONS RESEARCH INSTITUTE) 21 December 2021 (2021-12-21)<br>See paragraphs [0640], [0708], [0749]-[0750] and [0758]. | 1-13 |
| A | KR 10-2022-0071931 A (HYUNDAI MOTOR COMPANY et al.) 31 May 2022 (2022-05-31)<br>See paragraphs [0075], [0078] and [0092]; and claims 1 and 5. | 1-13 |
| A | KR 10-2023-0123933 A (QUALCOMM INCORPORATED) 24 August 2023 (2023-08-24)<br>See paragraphs [0101] and [0128]. | 1-13 |

☑ Further documents are listed in the continuation of Box C.  ☑ See patent family annex.

| | |
|---|---|
| * | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 December 2024** | **24 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

<table>
<tr><td colspan="2"></td><td>International application No.<br>**PCT/KR2024/013998**</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| A | KR 10-2022-0061137 A (INTERDIGITAL CE PATENT HOLDINGS, SAS) 12 May 2022 (2022-05-12)<br>See claims 1-11. | 1-13 |

Form PCT/ISA/210 (second sheet) (July 2022)

**INTERNATIONAL SEARCH REPORT**
Information on patent family members

International application No.

**PCT/KR2024/013998**

| Patent document cited in search report | | | Publication date (day/month/year) | Patent family member(s) | | | Publication date (day/month/year) |
|---|---|---|---|---|---|---|---|
| WO | 2023-030504 | A1 | 09 March 2023 | CN | 118251885 | A | 25 June 2024 |
| | | | | US | 2024-0205390 | A1 | 20 June 2024 |
| KR | 10-2021-0154760 | A | 21 December 2021 | | None | | |
| KR | 10-2022-0071931 | A | 31 May 2022 | CN | 116648907 | A | 25 August 2023 |
| | | | | US | 2024-0007623 | A1 | 04 January 2024 |
| | | | | WO | 2022-114752 | A1 | 02 June 2022 |
| KR | 10-2023-0123933 | A | 24 August 2023 | EP | 4268451 | A1 | 01 November 2023 |
| | | | | JP | 2024-501154 | A | 11 January 2024 |
| | | | | WO | 2022-140160 | A1 | 30 June 2022 |
| KR | 10-2022-0061137 | A | 12 May 2022 | CN | 114631316 | A | 14 June 2022 |
| | | | | EP | 4032278 | A1 | 27 July 2022 |
| | | | | US | 2022-0345693 | A1 | 27 October 2022 |
| | | | | WO | 2021-052792 | A1 | 25 March 2021 |

Form PCT/ISA/210 (patent family annex) (July 2022)